# EUROPEAN PATENT SPECIFICATION

(11) **EP 2 269 362 B1**
(45) Date of publication and mention of the grant of the patent: **13.06.2018**
(21) Application number: 08779248.7
(22) Date of filing: 21.04.2008
(51) Int. Cl.: H04L 29/06, H04L 12/28, H04W 84/00, H04L 29/08, H04W 8/26, H04W 84/04

(54) **METHOD FOR ENABLING COMMUNICATION BETWEEN A USER EQUIPMENT AND AN IMS GATEWAY**
VERFAHREN ZUR ERMÖGLICHUNG VON KOMMUNIKATION ZWISCHEN EINEM BENUTZERGERÄT UND EINEM IMS-GATEWAY
PROCÉDÉ POUR PERMETTRE UNE COMMUNICATION ENTRE UN ÉQUIPEMENT UTILISATEUR ET UNE PASSERELLE IMS

(43) Date of publication of application: 05.01.2011
(73) Proprietor: Telefonaktiebolaget LM Ericsson (publ), 164 83 Stockholm (SE)
(72) Inventor: MATSUMURA, Takeshi, Yokohama Kanagawa 222-0031 (JP); MURAKAMI, Shingo, Yokohama Kanagawa 226-0029 (JP); ODA, Toshikane, Tokyo 150-0012 (JP); HJELM, Johan, Tokyo 165-0025 (JP)
(74) Representative: Brann AB
(86) International application number: PCT/SE2008/050447
(87) International publication number: WO 2009/131497

(56) References cited:
- WO-A1-2006/045706
- WO-A1-2007/045278
- WO-A1-2007/071461
- WO-A1-2008/108699
- WO-A2-2008/030956
- US-A1- 2008 081 636
- "Telecommunications and Internet converged Services and Protocols for Advanced Networking (TISPAN); Customer Devices architecture and Reference Points; Draft ETSI TR 185 006", IEEE, LIS, SOPHIA ANTIPOLIS CEDEX, FRANCE, no. V1.0.0, 1 November 2007 (2007-11-01), XP014039278, ISSN: 0000-0001

## Description

### TECHNICAL FIELD

The present invention relates to a Femto base station, multimedia gateway, user equipment, IMS application server and control method thereof enabling a communication between a user equipment and the multimedia gateway via an IMS (IP Multimedia Subsystem) network.

### BACKGROUND

A network architecture called IMS has been developed by the 3rd Generation Partnership Project (3GPP) as an open standard for handling multimedia services and sessions in the packet domain. Various communication terminals and devices, hereinafter referred to as IMS terminals, that conform to the IMS standard are now known. A typical example of an IMS terminal is a mobile phone with IMS functionality. A personal computer (PC), a personal digital assistant (PDA), or the like can also serve as IMS terminals if they are equipped with IMS functionality. IMS terminals can provide multimedia services by, for example, receiving video streaming from a video-streaming server over an IMS network.

However, many communication terminals, hereinafter referred to as non-IMS terminals, still exist which are not IMS-enabled, i.e. that do not have IMS functionality). International Publication No. WO 2006/045706 discloses a multimedia gateway called a "Home IMS Gateway" (HIGA), enabling these non-IMS terminals which do not have IMS functionality such as a desktop PC, a laptop PC, and PSTN (Public Switched Telephone Network) connected phones including DECT to access services via the IMS network.

According to WO 2006/045706, the HIGA is located in a private network, to which at least one non-IMS terminal is connected. The HIGA includes a Session Initiation Protocol (SIP) Back-to-Back User Agent (B2BUA) for facilitating communication between non-IMS terminals and the IMS network. The HIGA also includes a SIP gateway implemented according to 3GPP TS 24.229 and IETF RFC 3261. The SIP gateway allows inter-operation between various client terminal signaling protocols and the SIP used by the IMS. For example, the SIP gateway may provide translation between ISDN-based signaling protocols and the SIP. Accordingly, the non-IMS terminals may or may not have SIP functionality. HIGA can be implemented on a "Set Top Box" (STB), a "Residential Gateway" (RGw) and different home devices. HIGA may be used to deliver, via the IMS network, home content, including home movies or pictures of a user's family stored in a Desktop PC connected thereto, to a TV to be used to display delivered content and being located at an external area, for example, a friend's home which the user visits or a hotel room where the user stays. Control of the delivered contents like trick play may be carried out by the user's mobile phone (i.e. 3-box model).

Recently, a home/residential base station called a "Femto base station (Femto-BS)" is proposed as a solution to the problem regarding a limited power reception level of the mobile phone especially in remote areas located far from an ordinary base station and in residences. The Femto-BS provides in-home mobility with maximum user data rates without loading macro node cell sites.

The Femto-BS may be collocated with the HIGA to provide a mobile communication service using user equipments (UE) .

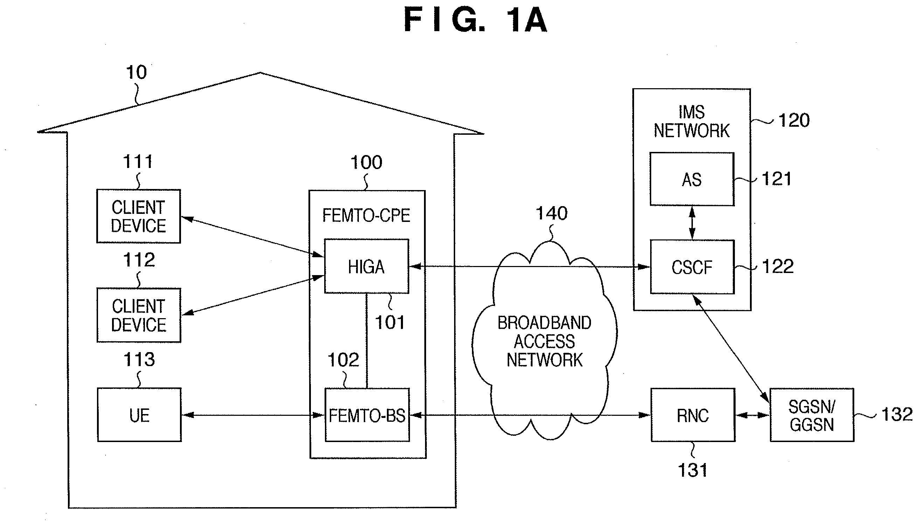

Fig.1A shows a situation where the HIGA and Femto-BS are implemented in a single device called "Femto Customer Premises Equipment (Femto-CPE)".

In Fig. 1A, there is a Femto CPE 100 which includes a HIGA 101 and a Femto-BS 102 in a user's residence 10. The HIGA 101 provides an IMS connection service to client devices 111 and 112. The client devices include client apparatuses with or without IMS functionality. The Femto-BS is a base station to generate a Femto-Cell/Access Point Base station inside the residence 10 and to provide the UE located in the Femto-Cell with an access to a mobile communication network via an RNC (Radio Network Controller) 131 and a SGSN/GGSN(Serving GPRS Support Node / Gateway GPRS Support Node) 132.

A UE is a user terminal to communicate with other UEs over the radio communication link according to a radio communication protocol such as ANSI-136, GSM (Global Standard for Mobile) communication, GPRS (General Packet Radio Service), EDGE (Enhanced Data Rates for GSM Evolution), Code Division Multiple Access (CDMA), Wideband Code Division Multiple Access (WCDMA), CDMA2000, Long Term Evolution (LTE) and UMTS (Universal Mobile Telecommunications System). The UE may be a mobile phone which can communicate over the mobile communications network. The RNC 131 is connected over a Broadband Access Network 140 to the Femto-BS 102. The SGSN/GGSN 132 connects and communicates data packet and control signals with the RNC 131.

IMS network 120 includes an IMS application server (AS) 121 and a Call Session Control Function (CSCF) 122. The CSCF 122 is a SIP server controlling sessions established between terminals in SIP communication and accessing the AS 121 to initiate certain services. The CSCF 122 is connected over the Broadband Access Network 140 to the HIGA 101. The CSCF 122 may include a Proxy CSCF (P-CSCF), an Interrogating CSCF (I-CSCF) and a Serving CSCF (S-CSCF). The AS 121 is a server which provides various applications to the Client Devices 111 and 112.

When considering the usage described in Fig. 1A, local connectivity between the HIGA 101 and the UE 113 may be established using a wireless communication functionality, for example based on any protocol of IEEE802.11a/b/g/n (WiFi), IEEE802.15 (Bluetooth), IEEE802.16 (WiMax) or IrDA (Infrared Data Association). If the UE 113 connects to the HIGA 101, it may be able to control the client devices 111 and 112 also connected to the HIGA 101 according to, for example, the UPnP and SIP protocols.

However, there will be a situation in which any one of the UE 113 and the HIGA 101 does not have such an IP based wireless communication functionality, for example, the UE does not have WiFi functionality or the HIGA 101 does not have Bluetooth and IrDA functionalities. Many UE 113 in the form of a mobile phone do no not have WiFi functionality. In such cases, the UE 113 can not access the HIGA 101 and the HIGA 101 can not recognize the existence of the UE 113. Accordingly, it is necessary to provide a technique which enables the HIGA 101 to recognize the existence of the UE 113 without using IP based wireless communication functionality between the HIGA 101 and UE 113.

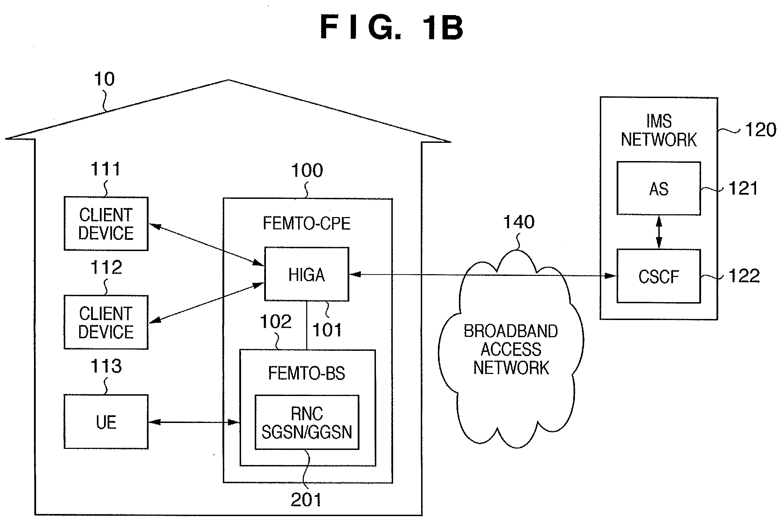

One solution to solve this problem is, as is depicted in Fig. 1B, to provide the Femto-BS 102 with a part of RNC and SGSN/GGSN functionalities 201 to extract packet data transmitted from the UE 113 over mobile radio access network. In this case, the HIGA 101 can intercept IMS messages sent and received by the UE 113 and thus they are able to know each other and communicate. However, this type of installation increases the complexity of the Femto-CPE 100 and its cost relative to the installation type depicted in Fig. 1A.

Thus, the present invention is intended to address the above-described problem without increasing the complexity of the Femto-CPE 100.

Further, if the UE 113 has IP based wireless communication functionality, there is a case in which the HIGA also cannot recognize the existence of the UE 113, as follows.

Generally, IEEE 802.11 Wireless LAN Access Point (WLAN-AP) can serve two or more Wireless Local Area Networks (WLANs). Each WLAN is identified by Service Set Identifier (SSID) and can have different security settings. This SSID is broadcast by the WLAN-AP so that the client can present the list of WLANs to the user in order for the user to select one of them, or the client can connect to one of the WLANs if the SSID and its associated security settings are pre-configured.

There are different methods for authenticating and authorizing a WLAN user and encrypting data transmitted over the WLAN, such as WEP (Wired Equivalent Privacy) and WPA(WiFi Protected Access). A user connected to a WLAN identified by an SSID cannot access another WLAN network identified by another SSID if their security settings are different.

FON (http://www.fon.com) is a public WLAN-AP service wherein a participant of the FON community opens their WLAN-AP to let the others access the Internet via the WLAN-AP. FON WLAN-AP serves two WLANs distinguished by different SSID; one of them is accessible only by home users who have knowledge of the security settings; the other is open for public use.

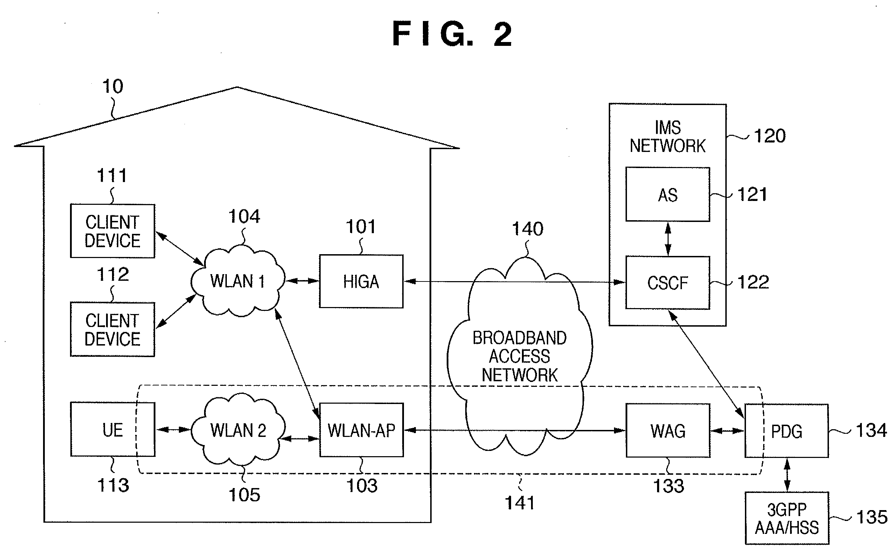

3GPP TS 23.234 and TS 33.234 define requirements necessary for interworking between WLAN and telecom network. Fig. 2 depicts a deployment scenario wherein WLAN-AP 103 is placed in a room such as a hotel room. In Fig. 2, the similar reference numerals are used for corresponding units depicted in Fig. 1A.

In Fig. 2, the WLAN-AP 103 serves two different WLANs (WLAN 1 (104) and WLAN 2 (105)) distinguished by SSID. WLAN 1 (104) is accessible only by devices to which an operator such as a hotel staff member preconfigures a private key. WLAN 2 (105) is made public with a relaxed security setting so that a hotel guest may access it with their own PC, mobile phone or the like. In this situation, the UE 113 cannot directly access a client device 111 such as a TV connected to WLAN 1 (104) and HIGA 101, because of different security settings.

Data transmitted on the WLAN 1 (104) can be protected using WEP for example. In the WLAN 1 (104), the private key is generated and set to devices including HIGA 101 and client devices 111 and 112 connected to the WLAN 1 (104). The key is input to Pseudo-Random Number Generator (PRNG) after a 24 bit Initialization Vector (IV) is attached to the key. The data transmitted over WLAN 1 (104) is encrypted by an XOR operation with the random number generated by the PRNG. The encrypted data is transmitted with the IV. The receiver uses the private key and the IV to decrypt the received data.

The private key is never transmitted over the WLAN 1 (104) and thus only devices where the private key is respectively preconfigured can communicate with each other over the WLAN 1 (104).

The UE 113 cannot access the WLAN 1 (104) but can access the WLAN 2 (105), because the security settings such as SSID and the private key for the WLAN 2 (105) are shared by a plurality of users of the WLAN 2 (105). After connecting to the WLAN 2 (105), the UE 113 communicates with 3GPP AAA/HSS (Authentication, Authorization and Accounting/Home Subscriber Server) 135 of the telecom operator in order to establish a secure connection to the Internet using the interworking defined by 3GPP. 3GPP AAA/HSS 135 authenticates and authorizes the UE 113 based on the shared secret stored in its ISIM or USIM.

If the authentication is successfully completed, an IP address is assigned to the UE 113 and the UE 113 can transmit data encrypted using a key assigned to the UE 113 to a Packet Data Gateway (PDG) 134. The PDG 134 can decode the received data from the UE 113 and forward the decoded data to the CSCF 122. Thus, a secure IP tunnel 141 is established between the PDG 134 and the UE 113 so that no other users can read the transmitted data.

Accordingly, in the situation of Fig. 2, WLAN-AP 103 cannot provide direct communication between the HIGA 101 and the UE 113. Thus, the UE 113 cannot access the HIGA 101 and the HIGA 101 cannot recognize the existence of the UE 113.

Thus, the present invention is intended to provide techniques for enabling the HIGA 101 to recognize the existence of the UE 113 and allow the UE 113 to communicate with the HIGA 101 via the IMS network 120 without introducing major alteration of the physical structure of the communication system.

"Telecommunications and Internet converged Services and Protocols for Advanced Networking (TISPAN); Customer Devices architecture and Reference Points; Draft ETSI TR 185 006", IEEE, LIS, SOPHIA ANTIPOLIS CEDEX, FRANCE, no. V1.0.0, 1 November 2007 (2007-11-01) describes a Customer Network Device (CND) that includes all the service-related functionalities that are necessary to fulfil a service between the CND and a Next Generation Network (NGN)-IMS Network. A Customer Network Gateway (CNG) offers capabilities to support attachment and transport in case of an IMS customer device connected via a femto cell.

### SUMMARY

According to a first aspect of the invention, there is provided a Femto base station adapted to generate a cell and communicate with a multimedia gateway having a IMS gateway functionality and a device detection functionality (for connecting a user equipment/client device connectable to the multimedia gateway). The Femto base station comprises receiving means for receiving cell information related to a cell generated by said Femto base station from a radio network controller, first transmitting means for transmitting the cell information to said multimedia gateway, and second transmitting means for transmitting the cell information to a user equipment connected to the cell. The cell information comprises information that is used by said multimedia gateway and said user equipment to generate an identification information uniquely associating said multimedia gateway with said user equipment.

In some embodiments, the cell information comprises Mobile Country Code, Mobile Network code, UMTS Cell Identity and Local Area Code.

According to a second aspect of the invention, there is provided a multimedia gateway, e.g. positioned in a Local Area Network such as a residential network, which has an IMS gateway functionality and a device detection functionality connected thereto and is adapted to communicate with a Femto base station adapted to generate a cell. The multimedia gateway comprises first receiving means for receiving cell information related to the cell from said Femto base station, generation means for generating an identification information uniquely associating said multimedia gateway with a user equipment connected to the Femto base station via the cell, using the received cell information, and transmitting means for transmitting a SIP message with the identification information to an IMS application server via an IMS network. In an example embodiment, there is provided a multimedia gateway which has an IMS gateway functionality and a device detection functionality and is adapted to communicate with a wireless local area network access point adapted to generate a first wireless local area network for said multimedia gateway and a second wireless local area network for a user equipment. The multimedia gateway comprises first receiving means for receiving from said wireless local area network access point of information used to uniquely identify said wireless local area network access point via the first wireless local area network, generation means for generating an identification information uniquely associating said multimedia gateway with the user equipment using the received information, and transmitting means for transmitting a SIP message with the identification information to an IMS application server via an IMS network.

In some embodiments, the identification information is P-Access-Network-Info to be attached in a header portion of the SIP message.

In some embodiments, the SIP message transmitted by said transmitting means of said multimedia gateway is a SUBSCRIBE message.

In some embodiments, the SIP message transmitted by said transmitting means of said multimedia gateway is a PUBLISH message with control information to control a client device connected to said multimedia gateway.

In some embodiments, the multimedia gateway further comprises second receiving means for receiving a SIP message notifying presence information regarding the user equipment.

In some embodiments, the multimedia gateway further comprises second receiving means for receiving a SIP message notifying a contact address of the user equipment.

According to a third aspect of the invention, there is provided a user equipment adapted to be connected to a Femto base station adapted to generate a cell and communicate with a multimedia gateway having a IMS gateway functionality and a device detection functionality. The user equipment comprises receiving means for receiving cell information related to the cell from said Femto base station, generation means for generating an identification information uniquely associating said multimedia gateway with said user equipment using the received cell information, and transmitting means for transmitting a SIP message with the identification information to an IMS application server via an IMS network. In another example embodiment, there is provided a user equipment to be connected to a wireless local area network access point adapted to generate a first wireless local area network for a multimedia gateway having a IMS gateway functionality and a device detection functionality and a second wireless local area network for said user equipment. Said user equipment comprises receiving means for receiving information used to uniquely identify the wireless local area network access point via the second wireless local area network, generation means for generating an identification information uniquely associating said multimedia gateway with said user equipment using the received information, and transmitting means for transmitting a SIP message with the identification information to a IMS application server via an IMS network.

In some embodiments, the identification information is P-Access-Network-Info to be attached in a header portion of the SIP message.

In some embodiments, the SIP message transmitted by the transmitting means of the user equipment is a SUBSCRIBE message.

In some embodiments, the SIP message transmitted by the transmitting means of the user equipment is a PUBLISH message with presence information regarding said user equipment.

In some embodiments, the receiving means of the user equipment further receives a SIP message notifying control information to control a client device connected to said multimedia gateway.

In some embodiments, the receiving means of the user equipment further receives a SIP message notifying a contact address of the multimedia gateway. In another example, there is provided an IMS application server adapted to be connected to an IMS network, and adapted to communicate with a multimedia gateway having a IMS gateway functionality and a device detection functionality and to a user equipment adapted to be connected to a Femto base station or a wireless local area network access point adapted to communicate with the multimedia gateway. The IMS application server comprises first receiving means for receiving a first SIP message transmitted from the multimedia gateway or the user equipment, wherein the first SIP message including identification information uniquely associating the multimedia gateway with the user equipment, storage means for storing a list of the received identification information associated with the originating SIP URI (Uniform Resource Identifier)of the first SIP message, searching means for searching the list for a group of SIP URIs having the same identification information, and transmitting means for transmitting a second SIP message destined to each of SIP URIs in the searched group with another SIP URI paired with the destination SIP URI.

In some embodiments, the IMS application server further comprises second receiving means for receiving a third SIP message with the identification information and an attachment from the multimedia gateway or the user equipment, wherein said searching means further searches the same identification information included in the list as the identification information received by the second SIP message, and said transmitting means further transmits the attachment received by the third SIP message to a destination associated with the searched identification information.

In some embodiments, the identification information is P-Access-Network-Info to be attached in a header portion of the SIP message.

In some embodiments, the attachment is presence information of the user equipment.

In some embodiments, the attachment is control information to control a client device connected to the multimedia gateway. In a further example, there is provided a IMS application server adapted to be connected to an IMS network and adapted to communicate with a multimedia gateway having a IMS gateway functionality and a device detection functionality and a user equipment adapted to be connected to a Femto base station or a wireless local area network access point adapted to communicate with the multimedia gateway. The IMS application server comprises transmitting means for transmitting a first SIP message requesting a notification to the IMS application server of an occurrence of a change in a registration status regarding the multimedia gateway or the user equipment, to a Call Session Control Function server, receiving means for receiving a second SIP message notifying SIP URI and identification information of the multimedia gateway or the user equipment whose registration status has changed, wherein the identification information uniquely associates the multimedia gateway with the user equipment, storage means for storing a list of the SIP URI and identification information received by the second SIP message in association with each other, searching means for searching SIP URIs associated with the same identification information for the list, and transmitting means for transmitting a SIP message notifying one of the searched SIP URIs to a destination corresponding to another searched SIP URI.

According to a fourth aspect of the invention, there is provided a method of controlling a Femto base station adapted to generate a cell and communicate with a multimedia gateway having an IMS gateway functionality and a device detection functionality. The method comprises the steps of: receiving cell information related to the cell generated by said Femto base station from a radio network controller, transmitting the cell information to said multimedia gateway, and transmitting the cell information to a user equipment connected to the cell. The cell information comprises information that is used by said multimedia gateway and said user equipment to generate an identification information uniquely associating said multimedia gateway with said user equipment.

According to a fifth aspect of the invention, there is provided a method of controlling a multimedia gateway which has an IMS gateway functionality and a device detection functionality connected thereto and is adapted to communicate with a Femto base station adapted to generate a cell. The method comprises the steps of: receiving cell information related to the cell from said Femto base station, generating an identification information uniquely associating said multimedia gateway with a user equipment connected to the Femto base station via the cell, using the received cell information, and transmitting a SIP message with the identification information to a IMS application server via an IMS network. In another example embodiment, there is provided a method of controlling a multimedia gateway which has an IMS gateway functionality and a device detection functionality and is adapted to communicate with a wireless local area network access point adapted to generate a first wireless local area network for said multimedia gateway and a second wireless local area network for a user equipment. The method comprises the steps of: receiving from said wireless local area network access point of information used to uniquely identify said wireless local area network access point via the first wireless local area network, generating an identification information uniquely associating said multimedia gateway with the user equipment using the received information, and transmitting a SIP message with the identification information (500) to an IMS application server via an IMS network.

In some embodiments, the method further comprises the step of receiving a SIP message notifying presence information regarding a user equipment.

In some embodiments, the method further comprises the step of receiving a SIP message notifying a contact address of a user equipment.

According to a sixth aspect of the invention, there is provided a method of controlling a user equipment adapted to be connected to a Femto base station adapted to generate a cell and communicate with a multimedia gateway having a IMS gateway functionality and a device detection functionality. The method comprises the steps of: receiving cell information related to the cell from said Femto base station, generating an identification information uniquely associating said multimedia gateway with said user equipment using the received cell information, and transmitting a SIP message with the identification information to a IMS application server via an IMS network. In another example embodiment, there is provided a method of controlling a user equipment to be connected to a wireless local area network access point adapted to generate a first wireless local area network for a multimedia gateway having a IMS gateway functionality and a device detection functionality and a second wireless local area network for said user equipment. The method comprises the steps of: receiving information used to uniquely identify the wireless local area network access point via the second wireless local area network, generating an identification information uniquely associating said multimedia gateway with said user equipment, using the received information, and transmitting a SIP message with the identification information to a IMS application server via an IMS network.

In some embodiments, the method of controlling the user equipment further comprises the step of receiving a SIP message notifying control information to control a client device connected to said multimedia gateway.

In some embodiments, the method of controlling the user equipment further comprises the step of receiving a SIP message notifying a contact address of the multimedia gateway. In a further example embodiment, there is provided a method of controlling a IMS application server adapted to be connected to an IMS network and adapted to communicate with a multimedia gateway having a IMS gateway functionality and a device detection functionality and a user equipment adapted to be connected to a Femto base station or a wireless local area network access point (103) adapted to communicate with the multimedia gateway. The method comprises the steps of receiving a first SIP message transmitted from the multimedia gateway or the user equipment, wherein the SIP message includes identification information uniquely associating the multimedia gateway with the user equipment, storing a list of the received identification information associated with the originating SIP URI of the first SIP message, searching the list for a group of SIP URIs having the same identification information, and transmitting a second SIP message destined to each of SIP URIs in the searched group with another SIP URI paired with the destination SIP URI.

In some embodiments, the method of controlling a IMS application server further comprises the steps of: receiving a third SIP message with the identification information and an attachment from the multimedia gateway or the user equipment, searching the same identification information included in the list as the identification information received by the second SIP message, and transmitting the attachment received by the third SIP message to a destination associated with the searched identification information. In yet another example embodiment, there is provided a method of controlling an IMS application server connected to an IMS network, and adapted to communicate with a multimedia gateway having a IMS gateway functionality and a device detection functionality and a user equipment adapted to be connected to a Femto base station or a wireless local area network access point adapted to communicate with the multimedia gateway. The method comprises the steps of transmitting a first SIP message requesting a notification to the IMS application server of an occurrence of a change in a registration status regarding the multimedia gateway or the user equipment, to a Call Session Control Function server, receiving a second SIP message notifying SIP URI and identification information of the multimedia gateway or the user equipment whose registration status has changed, wherein the identification information uniquely associates the multimedia gateway with the user equipment, storing a list of the SIP URI and identification information received by the second SIP message in association with each other, searching SIP URIs associated with the same identification information for the list, and transmitting a SIP message notifying one of the searched SIP URIs to a destination corresponding to another searched SIP URI.

### BRIEF DESCRIPTION OF DRAWINGS

Fig. 1A shows a situation where the HIGA and Femto-BS are implemented into one device called "Femto Customer Premises Equipment (Femto-CPE)" according to an embodiment of the invention;
Fig. 1B shows a situation where the HIGA and Femto-BS are implemented into Femto-CPE and the Femto-BS includes a part of RNC and SGSN/GGSN functionalities;
Fig. 2 shows a situation where the HIGA uses one wireless LAN and the UE uses another wireless LAN;
Fig. 3A illustrates an exemplary Femto-CPE 100 according to an embodiment of the invention;
Fig. 3B illustrates an exemplary user equipment (UE) 113 according to an embodiment of the invention;
Fig. 3C illustrates an exemplary IMS network 120 according to an embodiment of the invention;
Fig. 3D illustrates an exemplary HIGA 101 and WLAN-AP 103 according to an embodiment of the invention;
Fig. 4 only illustrates one example of installation of Femto-CPE 100 according to the invention;
Fig. 5 illustrates an example of P-Access-Network-Info according to an embodiment of the invention;
Fig. 6 illustrates an exemplary procedure to generate P-Access-Network-Info in the UE 113 according to an embodiment of the invention;
Fig. 7 shows an exemplary sequence diagram illustrating a procedure where the HIGA 101 is started (or restarted) and finds the UE 113 which newly enters the Femto Cell generated by the Femto-BS 102;
Fig. 8 shows an example of a list according to an embodiment of the invention.
Fig. 9 shows another exemplary sequence diagram illustrating a procedure where the HIGA 101 finds the UE 113 which newly enters the Femto Cell generated by the Femto-BS 102;
Fig. 10 shows an example of a notification list according to an embodiment of the invention;
Fig. 11 shows an example of "Registration information document #1" according to the embodiment;
Fig. 12 shows further exemplary sequence diagram illustrating a procedure where the HIGA 101 finds the UE 113 which newly enters the Femto Cell generated by the Femto-BS 102;
Fig. 13 shows an example of a presence table 1300 according to an embodiment of the invention;
Fig. 14 shows an example of presence information of the HIGA 101 stored in presence table 1300 according to an embodiment of the invention;
Fig. 15 shows an example of presence information of the UE 111 stored in presence table 1300 according to an embodiment of the invention;
Fig. 16 shows exemplary sequence diagram illustrating a procedure where the HIGA 101 is started (or restarted) and finds the UE 113 which newly connects to the WLAN 2 generated by the WLAN-AP 103.

### DETAILED DESCRIPTION

Embodiments of the invention will now be described with reference to the attached drawings. Each embodiment described below will be helpful in understanding a variety of concepts from the generic to the more specific.

It should be noted that the technical scope of the present invention is defined by claims, and is not limited by each embodiment described below. In addition, not all combinations of the features described in the embodiments are always indispensable for the present invention.

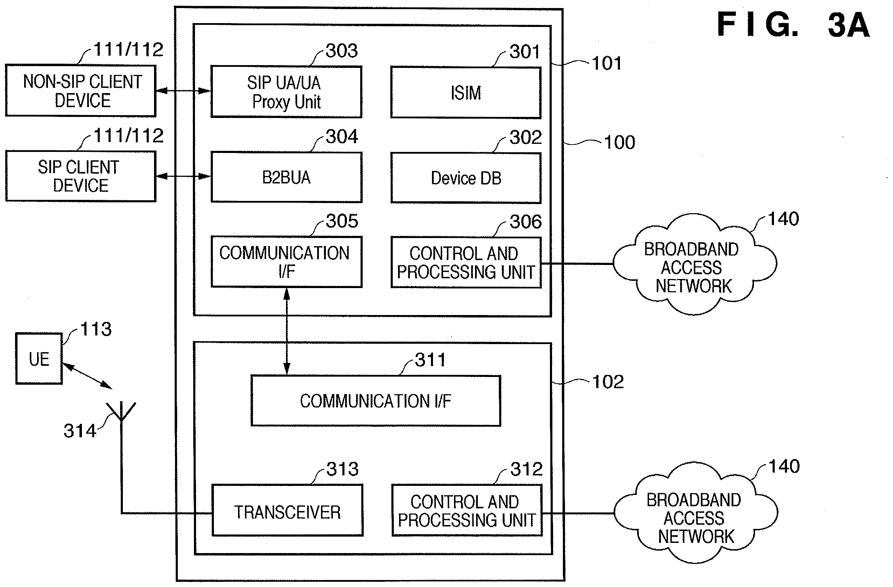

Installation of HIGA 101 and Femto-BS 102 in an indoor situation according to the embodiments of the present invention is the same as the one depicted in Fig. 1A. Fig. 3A illustrates an exemplary Femto-CPE 100 according to the embodiment of the present invention. The exemplary Femto-CPE 100 includes the HIGA 101 and Femto-BS 102.

The HIGA 101 includes at least IMS Subscriber Identity Module applications (ISIM) 301, Device DB 302, SIP UA/UA Proxy Unit 303, B2BUA 304, communication I/F 305, and a control and processing unit 306.

ISIM 301 stores a single IMS Private Identity (IMPI) and at least one of possibly multiple IMS Public Identities (IMPUs). One of the IMPUs may be allocated to Femto-BS 102 to make it easier for HIGA 101 to route incoming IMS messages.

Device DB 302 stores a list of client devices 111 and 112 including a control URI for each device. The control URI may be obtained from the client device in UPnP discovery procedure and stored in the Device DB 302.

The SIP UA/UA Proxy Unit 303 connects Non-SIP client devices which do not have the IMS functionality to IMS network 120 by converting the communication protocol of the Non-SIP client device (for example, HTTP) to SIP protocol. The B2BUA 304 connects the SIP client devices which do not have the IMS functionality to IMS network 120. The communication I/F 305 is an interface for communicating with the Femto-BS 102.

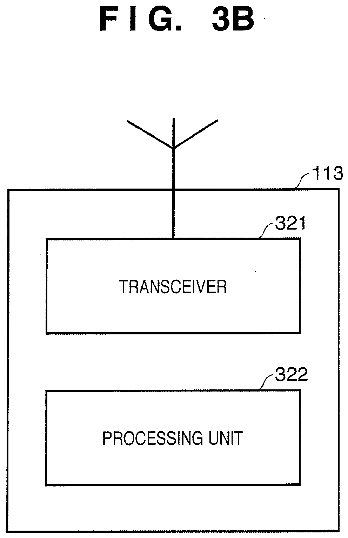

The control and processing unit 306 controls operation of the HIGA 101 including SIP message generation and UPnP device discovery function. The control and processing unit 306 is connected to Broadband Access Network 140 which in turn is connected to CSCF 122 to transmit and receive information including SIP message. The Femto-BS 102 includes at least a communication I/F 311, a control and processing unit 312 and a transceiver 313. The communication I/F 311 is an interface to communicate with the HIGA 101.The control and processing unit 312 which controls the overall processing in the Femto-BS 102 and is connected to Broadband Access Network 140 which in turn is connected to RNC 131. Femto-BS 102 also includes a transceiver 313 which handles packet traffic channels and control channels and is controlled by the control and processing unit 312. The transceiver 313 transmits and receives information over traffic channels or control channels to and from the UE 113 using an antenna 314. Fig. 3B illustrates an exemplary user equipment (UE) 113 according to the embodiment of the present invention. The exemplary UE 113 includes a transceiver 321 and a processing unit 322. The transceiver 321 transmits and receives information including SIP messages over traffic channels or control channels to and from the Femto-BS 102. The processing unit 322 executes processing necessary for communication via Femto-BS 102. The processing unit 322 generates SIP message and P-Access-Network-Info based on the cell information received from the Femto-BS 102 according to the embodiments of the present invention.

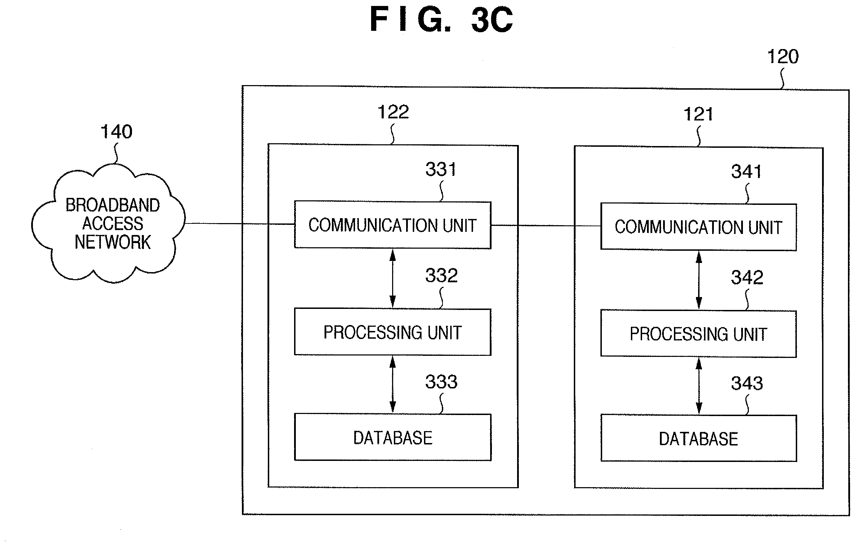

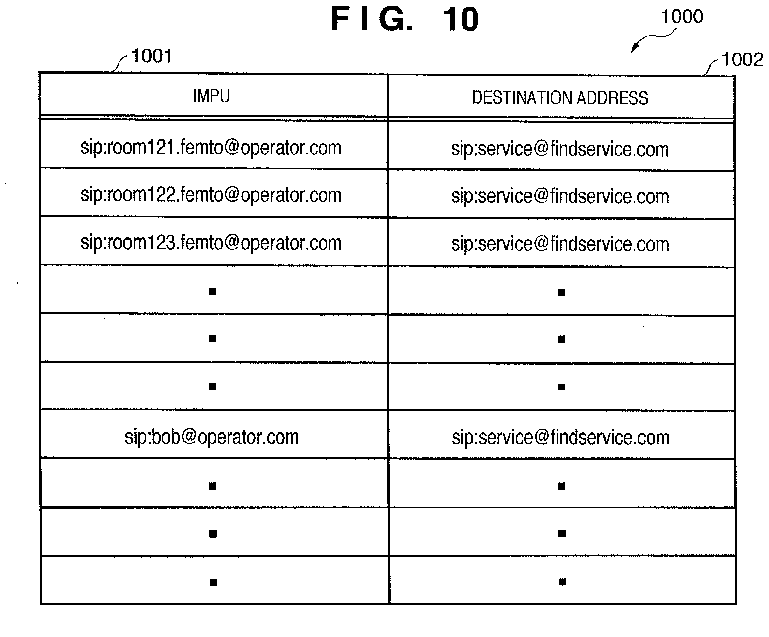

Fig. 3C illustrates an exemplary IMS network 120 according to the embodiment of the present invention. IMS network 120 includes the IMS application server (AS) 121 and the Call Session Control Function (CSCF) 122. CSCF 122 comprises at least a communication unit 331, a processing unit 332 and database 333. The communication unit 331 receives a SIP message from the HIGA 101, the SGSN/GGSN 132 or the AS 121 and transmits the SIP message to the HIGA 101, the SGSN/GGSN 132 or the AS 121. A processing unit 332 controls the communication unit 331 and the database 333 and executes processing of the received SIP message according to the embodiment of the present invention. The database 333 stores information including the notification list 1000 of Fig. 10.

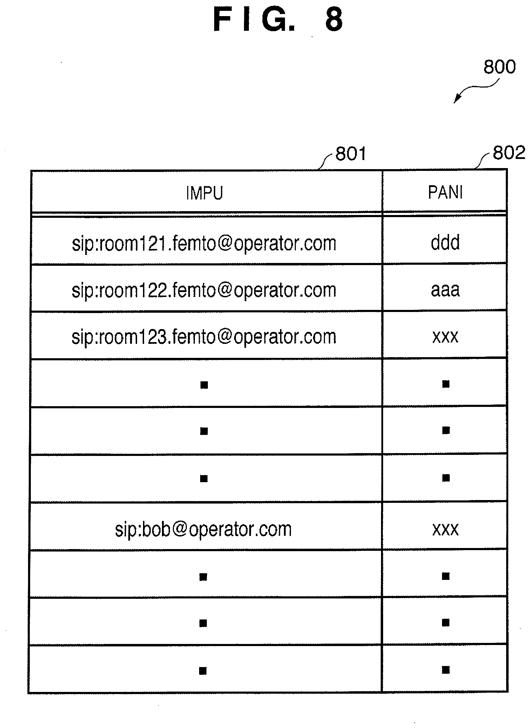

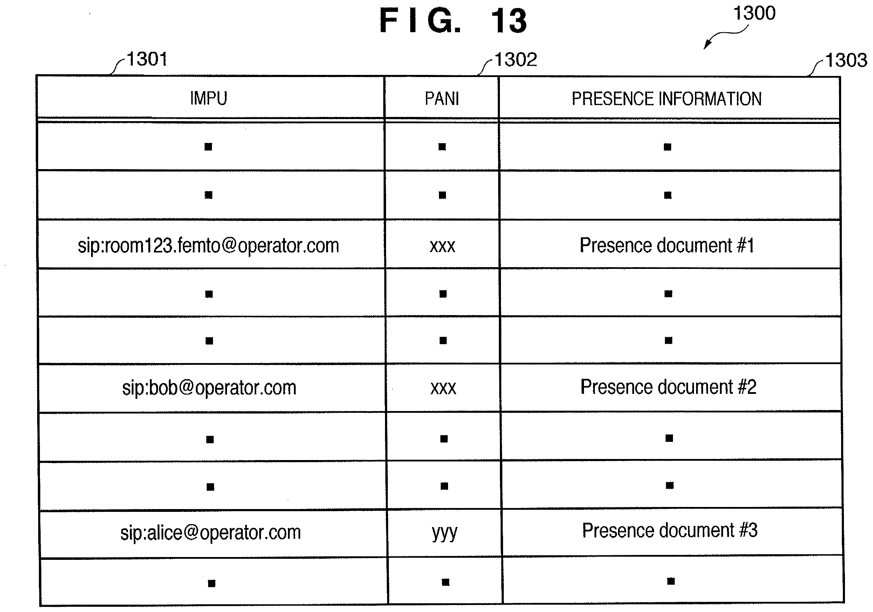

The AS 121 comprises at least a communication unit 341, a processing unit 342 and database 343. The communication unit 341 receives SIP message from the CSCF 122 and transmits SIP message to the CSCF 122. A processing unit 342 controls the communication unit 341 and the database 343 and executes processing of the received SIP message according to the embodiment of the present invention. The processing unit 342 also generates SIP message to be transmitted to the HIGA 101 and UE 113. The database 343 stores information including a list 800 of Fig. 8 and presence table 1300 of Fig. 13.

Fig. 3A only illustrates one example of installation of Femto-CPE 100 according to the present invention. However, the functionality of Femto-CPE 100 may be implemented differently, for example, the Femto-BS functionalities may be added to HIGA 101 using a software architectures.

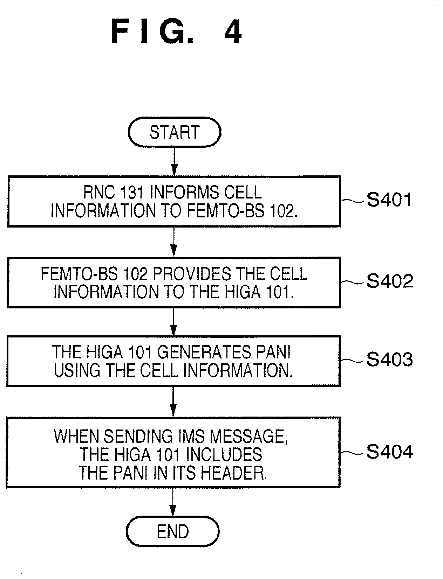

Fig. 4 illustrates an exemplary procedure to generate P-Access-Network-Info in the HIGA 101 according to the embodiment of the present invention. In this embodiment, the P-Access-Network-Info is utilized to associate the HIGA 101 with the UE 113.

In step S401, the RNC 131 configures Femto-BS 102 with cell information. The cell information may include "Mobile Country Code" (MCC), "Mobile Network code" (MNC), and "UMTS Cell Identity" (Cell-ID) and "Local Area Code" (LAC).

MCC, MNC and UMTS Cell Identity are a part of RRC System Information. To be more specific, MCC and MNC belong to MIB, LAC belongs to SIB-1 and UMTS Cell Identity belongs to SIB-3. They are delivered from the RNC 131 to Femto-BS 102 using NBAP message "System Information Update".

In step S402, the Femto-BS 102 extracts MCC, MNC, LAC, and Cell-ID from the received NBAP message. MCC, MNC and LAC may be previously provided with Femto-BS 102 by using a SIM card to store them. Femto-BS 102 may read MCC, MNC and LAC from the SIM card and provide HIGA 101 and the UE 113. Further, in step S402, the Femto-BS 102 transfers the cell information to the HIGA 101 via communication I/Fs 305 and 311.

In step S403, the HIGA 101 generates a P-Access-Network-Info. The P-Access-Network-Info is header information included in a SIP message. In step S404, when the HIGA 101 transmits IMS message, it includes the generated P-Access-Network-Info in its header.

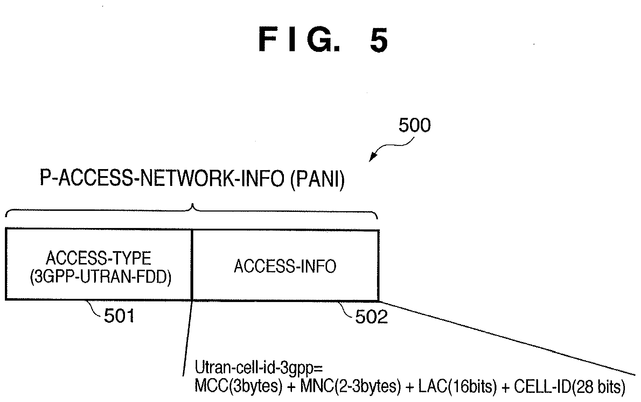

Fig. 5 illustrates an example of P-Access-Network-Info according to the embodiment of the present invention. As is depicted in Fig. 5, the P-Access-Network-Info 500 is divided into two fields of access-type 501 and access-info 502. The access-type field 501 indicates a type of radio access technology used by the apparatus to be connected to IMS network 120.

The access-type field 501 is set to any one of "3GPP-GERAN","3GPP-UTRAN-FDD", "3GPP-UTRAN-TDD", "3GPP2-1X", "3GPP2-1X-HRPD", "3GPP2-UMB", "IEEE-802.11", "IEEE-802.11a", "IEEE-802.11b", "IEEE-802.11g", "ADSL", "ADSL2", "ADSL2+", "RADSL", "SDSL", "HDSL", "HDSL2", "G.SHDSL", "VDSL", "IDSL", or "DOCSIS" as appropriate to the access technology in use. The AS 121 may customize services according to the access-type. In this embodiment, a case in which the access-type field 501 is set to "3GPP-UTRAN-FDD" will be described as an example.

In Fig.5, the access-info field 502 indicates an identification of a cell. The data in the access-info 502 corresponds to the access technology in use set in the access-type field 501.When the access-type field 501 is set to "3GPP-UTRAN-FDD", a "utran-cell-id-3gpp" parameter is set to a concatenation of the MCC, MNC, LAC (as described in 3GPP TS 23.003) and the Cell-ID (as described in 3GPP TS 25.331). Starting with the most significant bit, MCC (3 digits), MNC (2 or 3 digits depending on MCC value), LAC (fixed length code of 16 bits using full hexadecimal representation) and UMTS Cell Identity (fixed length code of 28 bits using a full hexadecimal representation).

A pair of MCC and MNC identifies a PLMN, and the Cell-ID is unique within a PLMN. Thus the combination of MCC, MNC and Cell-ID can identify a radio cell for a specific access type.

When the HIGA 101 transmits a SIP message, it is routed or forked to the AS 121. For example, the HIGA 101 can transmit REGISTER message and the AS 121 may obtain the header value by using Registration Event Package. Further details regarding Registration Event Package are described in RFC 3680 SIP Event Package for Registrations. If the HIGA 101 transmits other types of SIP messages, such as "SUBSCRIBE", "NOTIFY", "PUBLISH", "MESSAGE" and "INVITE", then their Request-URI may point to the AS 121 so that they are delivered there directly. Otherwise they are forked or routed at CSCF 122 to the AS 121 according to initial filter criteria settings of the sender, which is either the HIGA 101 or the UE 113.

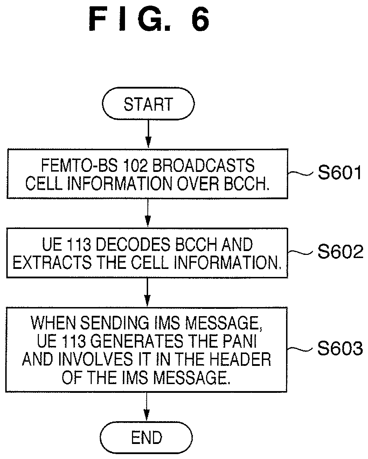

Fig. 6 illustrates an exemplary procedure to generate P-Access-Network-Info in the UE 113 according to the embodiment of the present invention.

In step S601, the Femto-BS broadcasts the cell information including MCC, MNC, LAC and the Cell-ID in BCCH logical channel. When UE enters in the Femto cell, it extracts the cell information from the BCCH logical channel in step S602.

When the UE 113 sends an IMS message, in step S603, the UE 113 generates P-Access-Network-Info based on the cell information received from the Femto-BS 102. The generated P-Access-Network-Info is the same as the P-Access-Network-Info header generated by the HIGA 101 as is illustrated in Fig.5.

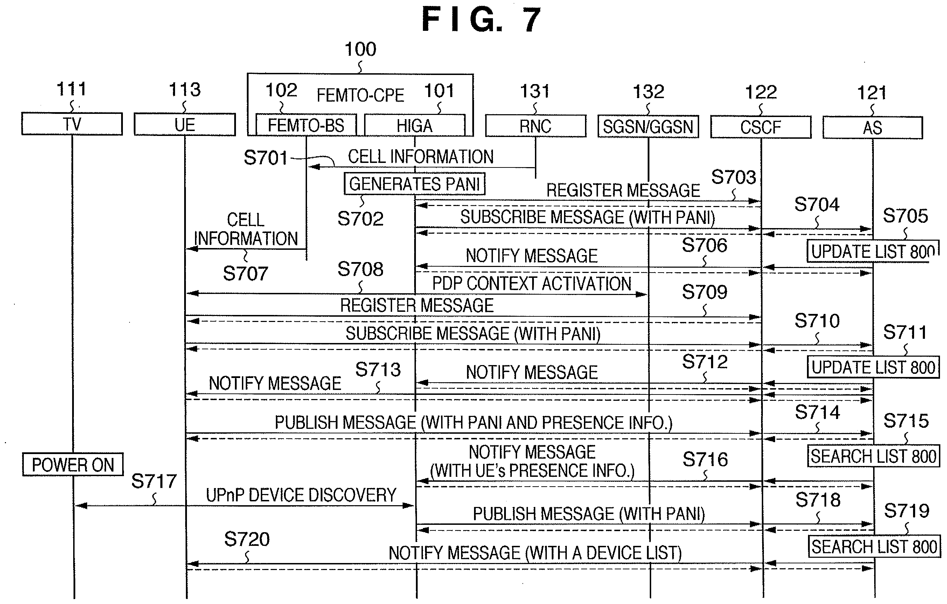

Fig. 7 shows an example of a sequence diagram illustrating a procedure where the HIGA 101 is started (or restarted) and finds the UE 113 which newly enters the Femto Cell generated by the Femto-BS 102. In this case, the HIGA 101 subscribes to the service provider's AS 121. When the UE 113 also subscribes to the service provider's AS 121, the HIGA 101 receives notification. In the situation according to Fig.7, the client device is a TV connected to the HIGA. SIP URIs each assigned to the UE 113, the HIGA 101, the CSCF 122 and the AS 121 are as follows.
UE 113 : sip:bob@operator.com
HIGA 101 : sip:room123.Femto@operator.com
CSCF 122 : sip:cscf.operator.com
AS 121 : sip:service@findservice.com

"Bob" is a user of the UE 113 and the UE 113 is a mobile phone. "Findservice.com" is a service provider who offers the pairing service according to the present invention. Bob has signed up with them and received SIP URI sip:bob@operator.com. The HIGA has also signed up with them and received SIP URI
sip:service@findservice.com. The service provider's AS 121 has subscription information including SIP URIs of the UE 113 and the HIGA 101.

In Fig. 7, a doted line indicates the "200 OK" response according to the SIP protocol corresponding to the SIP request immediately before it.

In step S701, when the HIGA is started or restarted, the RNC 131 sends cell information including MCC, MNC, LAC and UMTS cell identity to the Femto-BS 102. In step S702, the Femto-BS 102 provides the HIGA 101 with the received cell information and the HIGA 101 generates P-Access-Network-Info (PANI) 500.

In step S703, the HIGA 101 registers with the IMS network 120 by transmitting the following REGISTER message to the CSCF 122. An example of the header portions of REGISTER message necessary for explanation of this embodiment is shown as follows. Other portions which should be included in the header correspond to the standards of the corresponding RFC and 3GPP and their explanation will be omitted in this embodiment.

REGISTER sip:operator.com SIP/2.0
To: sip:room123.femto@operator.com
Contact: 220.110.162.34

In step S704, the HIGA 101 subscribes for the service provider by transmitting SUBSCRIBE message including the P-Access-Network-Info header to the AS 121 via the CSCF 122. An example of the header portions of SUBSCRIBE message necessary for explanation of this embodiment is shown as follows. Other portions which should be included in the header correspond to the standards of the corresponding RFC and 3GPP and their explanation will be omitted in this embodiment.

SUBSCRIBE sip:service@findservice.com SIP/2.0
P-Access-Network-Info: xxx
P-Asserted-Identity:
   sip:room123.femto@operator.com (P-Asserted-Identity indicates a sender of the sip message and is attached by the CSCF 122.)

In step S705, the AS 121 extracts the P-Access-Network-Info 500 and the IMPU (SIP URI) of the HIGA 101 from the received SUBSCRIBE message. The AS 121 has a list of P-Access-Network-Info associated with the IMPU and updates the list by the extracted information.

Fig. 8 shows the list according to the embodiment of the present invention. The list 800 includes IMPU 801 and P-Access-Network-Info 802. IMPU 801 is preliminarily provided based on the agreement between the service provider and the subscriber. In this embodiment, since the HIGA 101 has already signed up with the service provider findservice.com, the IMPU of the HIGA 101 is stored in the list 800. In step S705, the AS 121 updates P-Access-Network-Info 802, when the AS 121 receives the SUBSCRIBE message. In this embodiment, the AS 121 receives "xxx" as the P-Access-Network-Info and updates the P-Access-Network-Info 802 with the received value.

When the AS 121 updates the list 800, the AS 121 searches the list 800 for an entry having the same P-Access-Network-Info 802 as the one currently updated. In step 706, the AS 121 transmits NOTIFY message including the found IMPU. The found IMPU can be set to the SIP header or in the message body. Even if there is no entry having the same P-Access-Network-Info in the list 800, the AS 121 transmits the NOTIFY message without the IMPU. An example of the header portions of NOTIFY message necessary for explanation of this embodiment are shown as follows. Other portions which should be included in the header correspond to the standards of the corresponding RFC and 3GPP and their explanation will be omitted in this embodiment.
NOTIFY sip:room123.femto@operator.com

When the UE 113 enters the Femto-Cell generated by the Femto-BS in Femto-CPE 100, the UE 113 in step S707 receives the cell information broadcasted from the Femto-BS 102. In step S708, PDP Context is activated in order to access the IMS network 120 between the UE 113 and the SGSN/GGSN 132.

In step S709, the UE 113 registers with the IMS network 120 by transmitting the following REGISTER message to the CSCF 122. An example of the header portions of REGISTER message necessary for explanation of this embodiment is shown as follows. Other portions which should be included in the header correspond to the standards of the corresponding RFC and 3GPP and their explanation will be omitted in this embodiment.

REGISTER sip:operator.com SIP/2.0
To: sip:bob@operator.com
Contact: 61.196.102.213

In step S710, the UE 113 subscribes for the service provider by transmitting a SUBSCRIBE message including the P-Access-Network-Info header to the AS 121 via the CSCF 122. An example of the header portions of SUBSCRIBE message necessary for explanation of this embodiment are shown as follows. Other portions which should be included in the header correspond to the standards of the corresponding RFC and 3GPP and their explanation will be omitted in this embodiment.

SUBSCRIBE sip:service@findservice.com SIP/2.0
P-Access-Network-Info: xxx
P-Asserted-Identity: sip:bob@operator.com (P-Asserted-Identity indicates a sender of the sip message and is attached by the CSCF 122.)

In the embodiment of the present invention, if the UE 113 is located in the Femto Cell generated by the Femto-BS 102, P-Access-Network-Info included in the SUBSCRIBE messages respectively received from the HIGA in step S704 and the UE 113 in step S710 are the same. In step S711, the AS 121 extracts the P-Access-Network-Info 500 and the IMPU (SIP URI) of the UE 113 from the received SUBSCRIBE message. The AS 121 updates the list 800 in Fig. 8, by the extracted value from the SUBSCRIBE message.

When the AS 121 updates the list 800, the AS 121 searches the list 800 for such an entry having the same P-Access-Network-Info 802 as the one currently updated. At this time, the AS 121 finds a pair of entries each having the same P-Access-Network-Info. The AS 121 transmits NOTIFY messages to each entry of the found pair including others' IMPUs in the following steps.

In step S712, the AS 121 transmits NOTIFY message including the IMPU of the UE 113 to the HIGA 101. The IMPU (sip:bob@operator.com) to be informed to the HIGA 101 may be attached to the header of the message or to a message body. In step S713, the AS 121 transmits NOTIFY message including the IMPU of the HIGA 101 to the UE 113. The IMPU (sip:room123.femto@operator.com) to be informed to the UE 113 may be attached to the header of the message or to a message body. An example of the header portions of NOTIFY message necessary for explanation of this embodiment are shown as follows. Other portions which should be included in the header correspond to the standards of the corresponding RFC and 3GPP and their explanation will be omitted in this embodiment.
(For S712)
   NOTIFY sip:room123.femto@operator.com SIP/2.0 Same-PANI-IMPU: bob@operator.com
(For S713)
   NOTIFY sip:bob@operator.com SIP/2.0
   Same-PANI-IMPU: room123.femto@operator.com

According to this embodiment, the HIGA 101 and the UE can obtain a SIP URI from the received NOTIFY messages in order to communicate with each other.

In step S714, the UE 113 transmits PUBLISH SIP message including P-Access-Network-Info to the service provider's AS 121 via CSCF 122. The PUBLISH message also includes presence information of the UE 113 (Presence document #1). An example of the header portions of PUBLISH message necessary for explanation of this embodiment are shown as follows. Other portions which should be included in the header correspond to the standards of the corresponding RFC and 3GPP and their explanation will be omitted in this embodiment.

PUBLISH sip:service@findservice.com SIP/2.0
P-Access-Network-Info: xxx
P-Asserted-Identity: sip:bob@operator.com

When the AS 121 receives the presence information, the AS 121 in step S715 searches the list 800 for the same value as the P-Access-Network-Info included in the received PUBLISH message. In this embodiment, P-Access-Network-Info of the HIGA 101 is the same as the one of the UE 113.

In step S716, the AS 121 transmits NOTIFY message including the presence information (Presence document #1) of the UE 113 with the IMPU. The IMPU (sip:bob@operator.com) to be informed to the HIGA 101 may be attached to the header of the message or to a message body. An example of the header portions of NOTIFY message necessary for explanation of this embodiment are shown as follows. Other portions which should be included in the header correspond to the standards of the corresponding RFC and 3GPP and their explanation will be omitted in this embodiment.

NOTIFY sip:room123.femto@operator.com SIP/2.0
Same-PANI-IMPU: sip:bob@operator.com

When the HIGA 101 receive the NOTIFY message, it may trigger some action on the connected client devices, such as turning on a room light.

The HIGA 101 is monitoring any of client devices connected to it is turns on based on, for example, UPnP discovery procedure. If the user turns on the TV 111 in the room, in step S717, it triggers UPnP discovery procedure and the HIGA 101 finds the TV 111.

If the device is discovered, in step S718, the HIGA 101 transmits PUBLISH message to the service provider's AS 121 via CSCF 122 with P-Access-Network-Info. The PUBLISH message also includes presence information regarding available client devices for the UE 113 including TV 111 (Presence document #2). In this embodiment, the presence information includes a control URI of the corresponding client device stored in the Device DB 302. An example of the header portions of PUBLISH message necessary for explanation of this embodiment is shown as follows. Other portions which should be included in the header correspond to the standards of the corresponding RFC and 3GPP and their explanation will be omitted in this embodiment.

PUBLISH sip:service@findservice.com SIP/2.0
P-Access-Network-Info: xxx
P-Asserted-Identity:
   sip:room123.femto@operator.com

When the AS 121 receives the presence information, in step S719, the AS 121 searches the list 800 for the same value as the P-Access-Network-Info included in the received PUBLISH message. In this embodiment, P-Access-Network-Info of the UE 113 is the same as the one of the HIGA 101.

In step S720, the AS 121 transmits NOTIFY message including the presence information (Presence document #2) received from the HIGA 101 with the IMPU. The IMPU (sip:room123.femto@operator.com) to be informed to the UE 113 may be attached to the header of the message or to a message body. An example of the header portions of NOTIFY message necessary for explanation of this embodiment are shown as follows. Other portions which should be included in the header correspond to the standards of the corresponding RFC and 3GPP and their explanation will be omitted in this embodiment.

NOTIFY sip:bob@operator.com SIP/2.0
Same-PANI-IMPU: sip:room123.femto@operator.com

When the UE 113 receive this NOTIFY message, it can control TV 111 using the control URI included in the received SIP message.

In the above described embodiment, although the UE 113 is notified of the HIGA 101's public identity (sip:room123.femto@operator.com) and the HIGA 101 is notified of the UE 113's public identity (sip:bob@operator.com), one way notification may be sufficient. How to provide information to each other depends on which of HIGA 101 and the UE initiates the session setup.

According to the procedure of Fig.7, when the mobile user Bob who has the UE 113 stays at a room 123 in a certain hotel where the Femto-CPE locates, he can get a video clip stored in his home server connected through the IMS network 120 by accessing from his UE 113, and watch it on the large TV 111 using the received control URI in step S720.

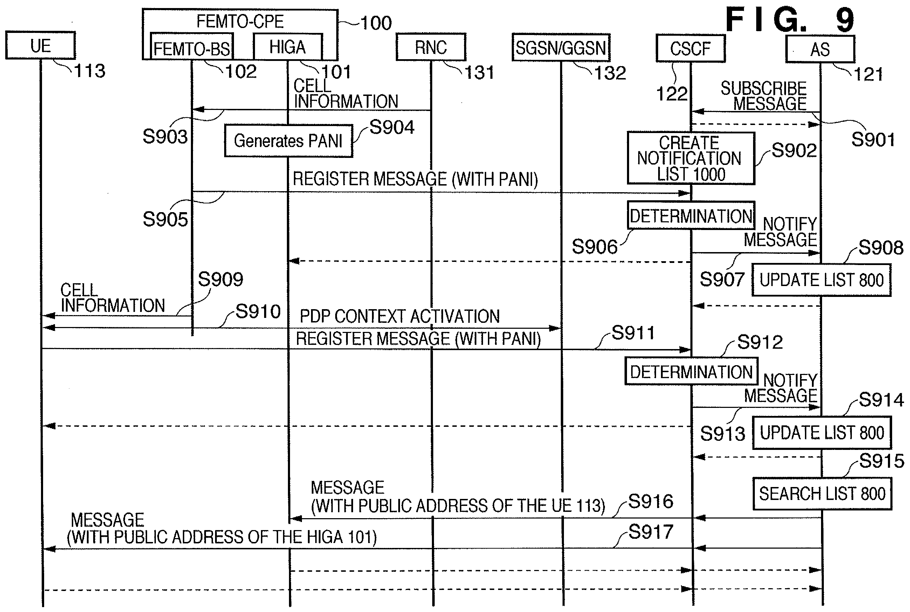

Fig. 9 shows another example of a sequence diagram illustrating a procedure where the HIGA 101 finds the UE 113 which newly enters the Femto Cell generated by the Femto-BS 102. In this case, the service provider' AS 121 subscribes to the CSCF 122 so that it can receive a notification upon a change in a registration status of the HIGA 101 or the UE 113.

In the situation according to Fig.9, SIP URIs each assigned to the UE 113, the HIGA 101, the CSCF 122 and the AS 121 are the same as the situation according to Fig. 7.

In Fig. 9, a dotted line also indicates the "200 OK" response according to the SIP protocol corresponding to the SIP request immediately before it.

In step S901, the service provider's AS 121 subscribes to the CSCF 122 to receive a notification regarding a change in registration status of their contracted customers. The AS 121 has a list of the contracted customers including SIP URI assigned to at least the HIGA 101 and the UE 113. The AS 121 transmits SUBSCRIBE message for each of SIP URIs to the CSCF 122.

An example of the header portions of SUBSCRIBE message necessary for explanation of this embodiment is shown as follows. Other portions which should be included in the header correspond to the standards of the corresponding RFC and 3GPP and their explanation will be omitted in this embodiment.

SUBSCRIBE sip:room123.femto@operator.com SIP/2.0
Event: reg
Contact: sip:service@findservice.com

SUBSCRIBE sip:bob@operator.com SIP/2.0
Event: reg
Contact: sip:service@findservice.com

In the above, "Event: reg" indicates that this SUBSCRIBE message relates to a request the CSCF to notify to the AS 121 if a register event from the specified SIP URI (sip:room123.femto@operator.com or sip:bob@operator.com) occurs according to the standards of the corresponding RFC 3680. "Contact" header is set to the destination address of NOTIFY message, i.e. the AS 121 (sip:service@findservice.com). When the AS 121 transmits the SUBSCRIBE message, it does not have to involve the P-Asserted-Identity in the message.

In step S902, the CSCF creates a notification list based on the received SUBSCRIBE messages from the AS 121.

Fig. 10 shows the notification list according to the embodiment of the present invention. The list 1000 includes IMPU 1001 and destination address 1002. The specified SIP URI in SUBSCRIBE message is stored in IMPU 1001. SIP URI set in "Contact" field in SUBSCRIBE message is stored destination address 1002 associated with the corresponding specified address.

Since procedures in step S903 and S904 correspond to procedures in step S701 and S702 in Fig. 7 and the detail descriptions are omitted.

In step S905, the HIGA 101 registers with the IMS network 120 by transmitting the following REGISTER message to the CSCF 122. An example of the header portions of REGISTER message necessary for explanation of this embodiment is shown as follows. Other portions which should be included in the header correspond to the standards of the corresponding RFC and 3GPP and their explanation will be omitted in this embodiment.

REGISTER sip:operator.com SIP/2.0
To: sip:room123.femto@operator.com
Contact: 220.110.162.34
P-Access-Network-Info: xxx

In this embodiment according to Fig. 9, REGISTER message should include P-Access-Network-Info generated based on the received cell information.

In step S906, the CSCF 122 determines whether or not the registration event should notify the AS 121 by searching the SIP URI included in the REGISTER message (i.e. sip:room123.femto@operator.com) for the notification list 1000. If the CSCF 122 finds the corresponding SIP URI in the notification list, the CSCF 122 transmits NOTIFY message to the AS 121 in step S907. The NOTIFY message contains the registration information document #1 in the message body. An example of the header portions of NOTIFY message necessary for explanation of this embodiment is shown as follows. Other portions which should be included in the header correspond to the standards of the corresponding RFC and 3GPP and their explanation will be omitted in this embodiment.

NOTIFY sip:service@findservice.com SIP/2.0
Event: reg

In this embodiment, registered SIP URI to the CSCF 122 is attached to the message body as "Registration information document #1" in XML format according to RFC3680 standard. The CSCF also involve P-Access-Network-Info extracted from the received REGISTER message in step S905 into the "Registration information document #1".

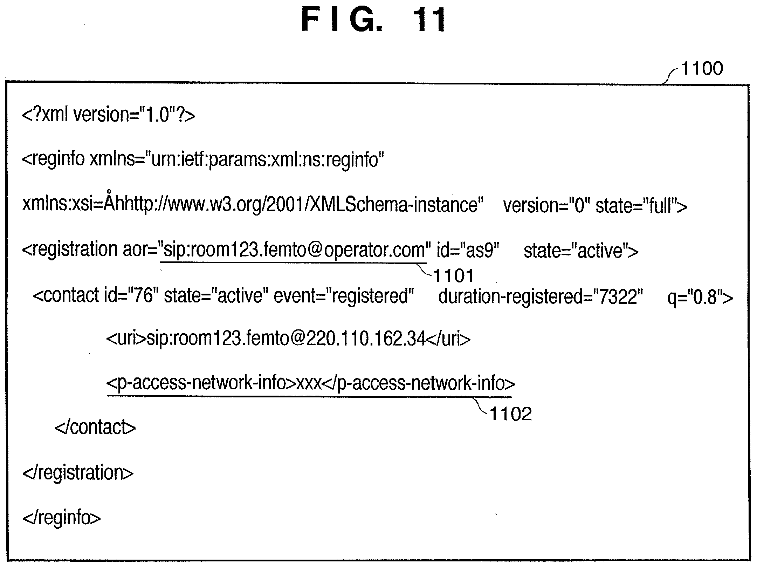

Fig. 11 shows an example of "Registration information document #1" according to the present embodiment. In Fig. 11, the underlined portion 1101 shows the registered SIP URI to the CSCF 122 and the underlined portion 1102 shows P-Access-Network-Info from the registered device.

In step S908, the AS 121 extracts the P-Access-Network-Info 500 and the IMPU (SIP URI) of the HIGA 101 from the attached document to the NOTIFY message. The AS 121 has the list 800 as is depicted in Fig. 8 and updates the list 800 by the received information.

Since procedures in step S909 and S910 correspond to procedures in step S706 and S707 in Fig. 7 and the detail descriptions are omitted.

In step S911, the UE 113 registers with the IMS network 120 by transmitting the following REGISTER message to the CSCF 122. An example of the header portions of REGISTER message necessary for explanation of this embodiment is shown as follows. Other portions which should be included in the header correspond to the standards of the corresponding RFC and 3GPP and their explanation will be omitted in this embodiment.

REGISTER sip:operator.com SIP/2.0
To: sip:bob@operator.com
Contact: 61.196.102.213
P-Access-Network-Info: xxx

In this embodiment according to Fig. 9, REGISTER message should include P-Access-Network-Info generated based on the received cell information.

In step S912, the CSCF 122 determines whether or not the registration event should notify the AS 121 by searching the SIP URI included in the REGISTER message (i.e. sip:bob@operator.com) for the notification list 1000. If the CSCF 122 finds the corresponding SIP URI in the notification list, the CSCF 122 transmits NOTIFY message to the AS 121 in step S913. The NOTIFY message contains the registration information document #2 in the message body.

An example of the header portions of NOTIFY message necessary for explanation of this embodiment is shown as follows. Other portions which should be included in the header correspond to the standards of the corresponding RFC and 3GPP and their explanation will be omitted in this embodiment.

NOTIFY sip:service@findservice.com SIP/2.0
Event: reg

In this embodiment, registered SIP URI (i.e. sip:bob@operator.com) is attached to the message body as "Registration information document #2" in XML format according to RFC3680 standard. The CSCF also involves P-Access-Network-Info extracted from the received REGISTER message in step S912 into the "Registration information document #2".

In step S914, the AS 121 extracts the P-Access-Network-Info 500 and the IMPU (SIP URI) of the HIGA 101 from the attached document to the NOTIFY message. The AS 121 has the list 800 as is depicted in Fig. 8 and updates the list 800 by the received information.

When the list 800 is updated, in step S915, the AS 121 searches the list 800 for the same value as the updated P-Access-Network-Info. In this embodiment, P-Access-Network-Info of the HIGA 101 is the same as the one of the UE 113. If the AS 121 finds a set of P-Access-Network-Info 800 respectively associated with the different IMPU 801, the AS 121 transmits SIP message to a respective destination as follows.

In step S916, the AS 121 transmits MESSAGE message to HIGA 101 with IMPU of the UE 113 as a public identity. An example of the header portions of MESSAGE message necessary for explanation of this embodiment is shown as follows. Other portions which should be included in the header correspond to the standards of the corresponding RFC and 3GPP and their explanation will be omitted in this embodiment.

MESSAGE sip:room123.femto@operator.com SIP/2.0
Same-PANI-IMPU: sip:bob@operator.com

The IMPU (sip:bob@operator.com) to be informed to the HIGA 101 may be attached to the header of the message or to a message body.

In step S917, the AS 121 transmits MESSAGE to UE 113 with IMPU of the HIGA 101 as a public identity. An example of the header portions of MESSAGE message necessary for explanation of this embodiment is shown as follows. Other portions which should be included in the header correspond to the standards of the corresponding RFC and 3GPP and their explanation will be omitted in this embodiment.

MESSAGE sip:bob@operator.com SIP/2.0
Same-PANI-IMPU: sip:room123.femto@operator.com

The IMPU (sip:room123.femto@operator.com) to be informed to the UE 113 may be attached to the header of the message or to a message body.

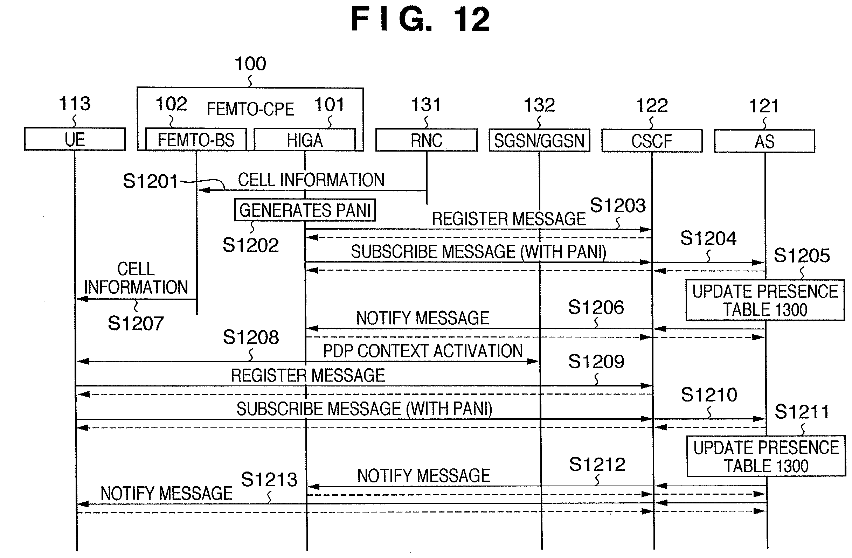

HIGA 101 knows that now the UE exists in the room and offers some services, such as list of TV-programs that a user of the UE can selects using his/her UE. Fig. 12 shows further example of a sequence diagram illustrating a procedure where the HIGA 101 finds the UE 113 which newly enters the Femto Cell generated by the Femto-BS 102. In this case, the AS 121 behaves as a IMS operator's presence server which provides presence information to the HIGA 101 and UE 113.

In the situation according to Fig.12, SIP URIs each assigned to the UE 113, the HIGA 101 and the CSCF 122 are the same as the situation according to Fig. 7. SIP URI assigned to the AS is as follows.
AS 121 : sip:ps.operator.com

In Fig. 12, a doted line also indicates the "200 OK" response according to the SIP protocol corresponding to the SIP request immediately before it.

In Fig. 12, since the processing according to steps S1201 through steps S1203 are similar to the processing according to steps S701 through s703 of Fig. 7, the corresponding descriptions are omitted.

In step S1204, the HIGA 101 subscribes for its presence by transmitting SUBSCRIBE message including the P-Access-Network-Info header to the AS 121 via the CSCF 122. Routing at the CSCF 122 to the AS 121 is done based on the HIGA 101's Initial Filter Criteria (IFC). An example of the header portions of SUBSCRIBE message necessary for explanation of this embodiment is shown as follows. Other portions which should be included in the header correspond to the standard of RFC and 3GPP and their explanation will be omitted in this embodiment.

SUBSCRIBE sip:room123.femto@operator.com SIP/2.0
Event: presence
P-Access-Network-Info: xxx

In step S1205, the AS 121 extracts the P-Access-Network-Info 500 and the IMPU (SIP URI) of the HIGA 101 from the received SUBSCRIBE message. The AS 121 has a presence table including presence information associated with PANI and the IMPU, and updates the presence table by the extracted information.

Fig. 13 shows the presence table 1300 according to the embodiment of the present invention. The presence table 1300 includes IMPU 1301, P-Access-Network-Info (PANI) 1302 and presence document 1303. IMPU 1301 and PANI 1302 are the same as those have already been described above. In presence information 1303, presence documents are stored associated with the IMPU 1301 and PANI 1302, respectively. Each of the presence documents includes a status of the corresponding apparatus.

When the AS 121 updates the presence table 1300, the AS 121 searches the table for such an entry having the same PANI 1302 as the one currently updated. In step 1206, the AS 121 transmits NOTIFY message with the presence information of the HIGA 101. If the AS 121 found the entry having the same PANI as the one of the HIGA 101, the attached presence information includes the corresponding IMPU 1301 of the found entry. Even if there is no entry having the same PANI in the presence table 1300, the AS 121 transmits the NOTIFY message with the presence information not including IMPU 1301. An example of the header portions of NOTIFY message necessary for explanation of this embodiment are shown as follows. Other portions which should be included in the header correspond to the standards of the corresponding RFC and 3GPP and their explanation will be omitted in this embodiment.
NOTIFY sip:room123.femto@operator.com

In Fig. 12, since the processing according to steps S1207 through steps S1209 are similar to the processing according to steps S707 through s709 of Fig. 7, the corresponding descriptions are omitted.

In step S1210, the UE 113 subscribes for its presence by transmitting SUBSCRIBE message including the P-Access-Network-Info header to the AS 121 via the CSCF 122. Routing at the CSCF 122 to the AS 121 is done based on the 's Initial Filter Criteria (IFC). An example of the header portions of SUBSCRIBE message necessary for explanation of this embodiment is shown as follows. Other portions which should be included in the header correspond to the standard of RFC and 3GPP and their explanation will be omitted in this embodiment.

SUBSCRIBE sip:bob@operator.com SIP/2.0
Event: presence
P-Access-Network-Info: xxx

In step S1211, the AS 121 extracts the P-ANI 500 and the IMPU (SIP URI) of the UE 113 from the received SUBSCRIBE message. The AS 121 updates presence table 1300 by the extracted values from the SUBSCRIBE message.

When the AS 121 updates the presence table 1300, the AS 121 searches the table 1300 for such an entry having the same PANI 1302 as the one currently updated. At this time, the AS 121 finds a pair of entries each having the same PANI. The AS 121 transmits NOTIFY messages to each entry of the found pair with the updated presence information in the following steps.

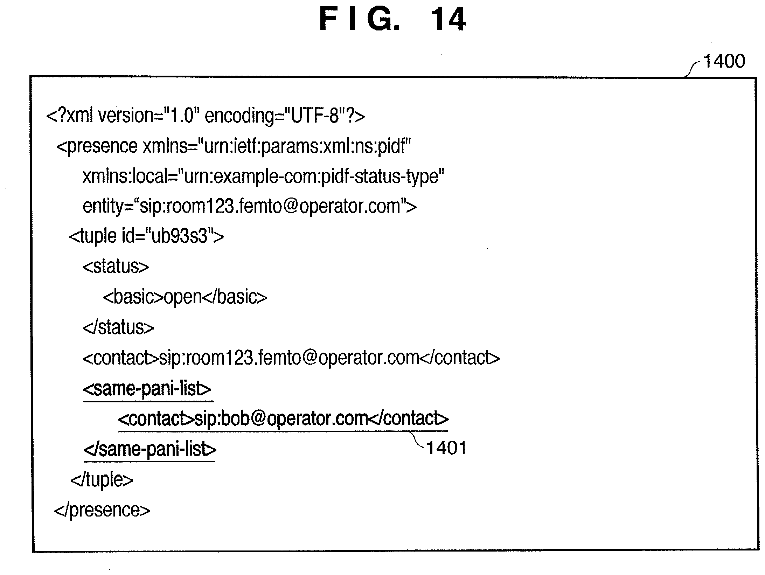

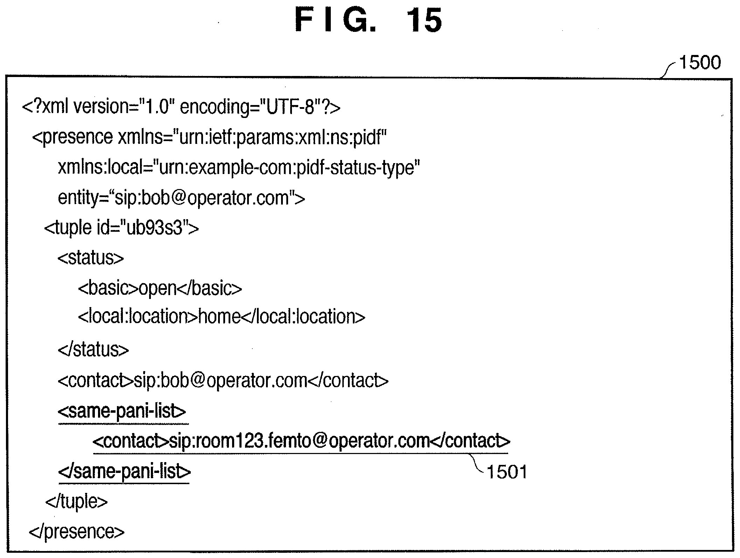

In step S1212, the AS 121 transmits NOTIFY message with the presence information of the HIGA 101, the presence information includes the IMPU of the UE 113 as is depicted at an underline portion 1401 in Fig. 14. In step S1213, the AS 121 transmits NOTIFY message with the presence information of the UE 113, the presence information includes the IMPU of the HIGA 101 as is depicted at an underline portion 1501 in Fig. 15.

An example of the header portions of NOTIFY message necessary for explanation of this embodiment are shown as follows. Other portions which should be included in the header correspond to the standards of the corresponding RFC and 3GPP and their explanation will be omitted in this embodiment.
(For the HIGA)
   NOTIFY sip:room123.femto@operator.com SIP/2.0
   Event: presence
(For the UE)
   NOTIFY sip:bob@operator.com SIP/2.0
   Event: presence

According to this embodiment, the HIGA 101 and the UE can obtain SIP URI from the received presence information to communicate with each other.

In the above embodiments, the HIGA 101 and the Femto-BS 102 are integrated into a single device. However, the implementation according to the embodiment of the present invention is not limited to this. For example, the HIGA 101 and the Femto-BS 102 may be separately located and connected over local area network (LAN) using a wired or wireless connection. Note that although IP level connectivity is assumed between the HIGA 101 and the Femto-BS 102, the connection is not used to transmit user data from the UE 113. UPnP or SIP protocol is well suited as a protocol between the HIGA 101 and the Femto-BS 102 because the HIGA 101 has UPnP Control Point and SIP B2BUA functionalities. The Femto-BS 102 may generate P-Access-Network-Info and give it to HIGA 101 over the LAN, or Femto-BS 102 may give information necessary for generating P-Access-Network-Info to the HIGA 101.

Femto-BS 102 may generate more than one Femto-cell, which means Femto-BS 102 has more than one sector. One scenario may be to allocate a first sector (sector 1) to one room (room 1) and a second sector (sector 2) to another room (room 2) next to the room 1. In this situation, P-Access-Network-Info takes different values between sector 1 and sector 2. One way to avoid mixing up these two rooms is to allocate different IMPU to each sector and expose them to the AS 121. One to one mapping between P-Access-Network-Info and IMPU makes it possible for the AS 121 to deliver IMS message to the correct room.

This invention offers mobile phone users an easy way to discover the HIGA 101 and services offered by it, when the HIGA 101 is collocated with Femto-BS 102, even if the user's mobile phone doesn't have local connectivity to HIGA 101 using wireless LAN.

This invention does not require implementing RNC, GGSN and SGSN functionalities in the Femto CPE and thus it does not increase complexity and cost.

In the followings, further embodiments according to installation of HIGA 101 and WLAN-AP 103 in an indoor situation as is depicted in Fig. 2 are described.

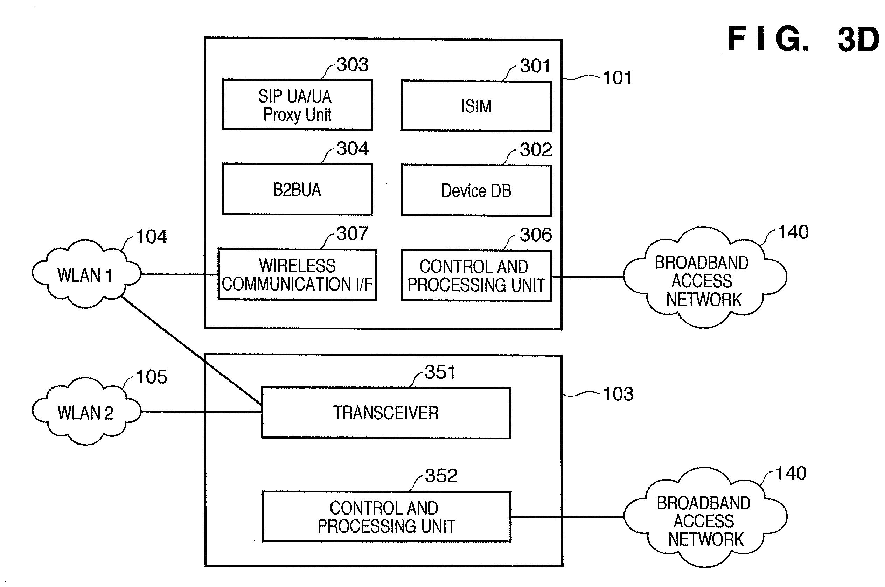

Fig. 3D illustrates an exemplary HIGA 101 and WLAN-AP 103 according to the embodiment of the present invention.

The hardware configuration of the HIGA 101 according to the present invention is similar to the one depicted in Fig. 3A. The HIGA 101 includes at least ISIM 301, Device DB 302, SIP UA/UA Proxy Unit 303, B2BUA 304, wireless communication I/F 307, and a control and processing unit 306.

The communication between the HIGA 101 and the client device 111 or 112 are established via the WLAN 1 generated by the WLAN-AP 103. The communication I/F 307 is an interface for wireless communication between the HIGA 101 and the client device.

The WLAN-AP 103 includes at least a transceiver 351 a control and processing unit 352. The transceiver 351 generates the WLAN 1 (104) to provide communication between the HIGA 101 and the client devices. The transceiver 351 also generates WLAN 2 (105) for the UE 113 to communicate with the PDG 134 via broadband access network 140 and WAG 133.

The control and processing unit 352 which controls the overall processing in the WLAN-AP 103 including SIP message generation and UPnP device discovery function. The control and processing unit 352 is connected to Broadband Access Network 140 which in turn is connected to WAG 133 to transmit and receive information including SIP message.

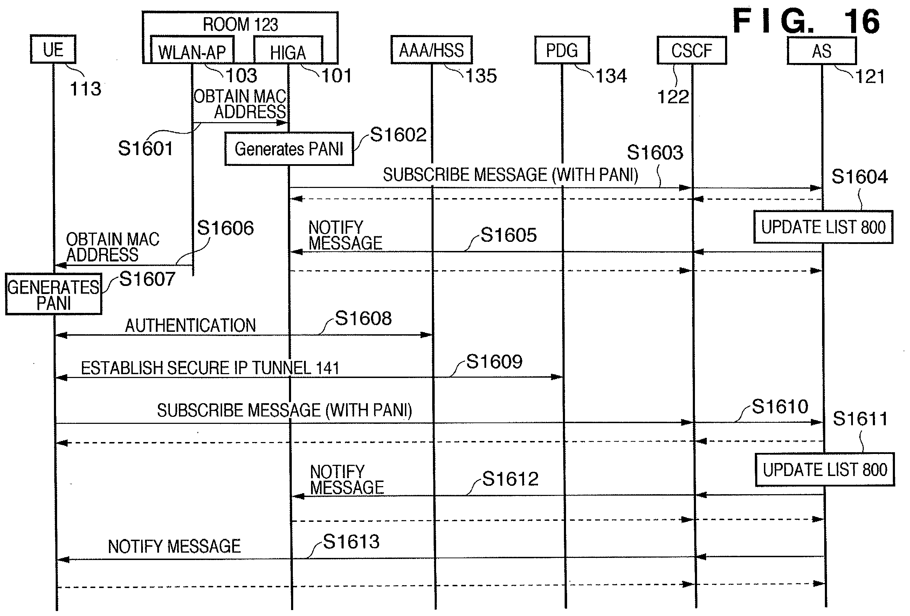

Fig. 16 shows an example of a sequence diagram illustrating a procedure where the HIGA 101 is started (or restarted) and finds the UE 113 which newly connects to the WLAN 2 generated by the WLAN-AP 103. In this case, the HIGA 101 subscribes to the service provider's AS 121. When the UE 113 also subscribes to the service provider's AS 121, the HIGA 101 receives notification.

In the situation according to Fig.16, the client device is a TV connected to the HIGA. SIP URIs each assigned to the UE 113, the HIGA 101, the CSCF 122 and the AS 121 are the same in the situation according to Fig. 7.

In Fig. 16, a doted line indicates the "200 OK" response according to the SIP protocol corresponding to the SIP request immediately before it.

In step S1601, when the HIGA is started or restarted, the HIGA sets up a wireless connection between the WLAN-AP 103 via WLAN 1 and obtains MAC address of the WLAN-AP 103. In step S1602, the HIGA 101 generates P-Access-Network-Info (PANI) 500 using the obtained MAC address of the WLAN-AP according to 3GPP TS 24.229 (V7.11.0), 7.2A.4. Thus, in this embodiment, the access-type field 501 is, for example, set to "IEEE-802.11g" and the access-info field 502 indicates the MAC address.

In step S1603, the HIGA 101 transmits SIP message including the generated PANI 500 to the AS 121. An example of the header portions of SIP message necessary for explanation of this embodiment is shown as follows. Other portions which should be included in the header correspond to the standards of the corresponding RFC and 3GPP and their explanation will be omitted in this embodiment.

SUBSCRIBE sip:service@findservice.com SIP/2.0
P-Access-Network-Info: xxx
P-Asserted-Identity:
   sip:room123.femto@operator.com (P-Asserted-Identity indicates a sender of the sip message and is attached by the CSCF 122.)

In step S1604, the AS 121 extracts the P-Access-Network-Info 500 and the IMPU (SIP URI) of the HIGA 101 from the received SIP message. The AS 121 has a list of P-Access-Network-Info associated with the IMPU and updates the list by the extracted information. The list is similar to the list 800 of Fig. 8. In this embodiment, the AS 121 receives "xxx" as the P-Access-Network-Info and updates the P-Access-Network-Info 802 with the received value.

When the AS 121 updates the list 800, the AS 121 searches the list 800 for such an entry having the same P-Access-Network-Info 802 as the one currently updated. In step 1605, the AS 121 transmits NOTIFY message including the found IMPU. Even if there is no entry having the same P-Access-Network-Info in the list 800, the AS 121 transmits the NOTIFY message without the IMPU. An example of the header portions of NOTIFY message necessary for explanation of this embodiment are shown as follows. Other portions which should be included in the header correspond to the standards of the corresponding RFC and 3GPP and their explanation will be omitted in this embodiment.
NOTIFY sip:room123.femto@operator.com SIP/2.0

In step S1606, the UE 113 set up wireless connection between the WLAN-AP 103 via WLAN 2 and obtains the MAC address of WLAN-AP 103 using ARP for example. In step S1607, the UE 113 generates P-Access-Network-Info 500 using the obtained PANI 500. The generated PANI by the UE 113 is the same as the one generated by the HIGA in step S1602.

In step S1608, the UE 113 and 3GPP AAA/HSS 135 performs mutual authentication according to 3GPP TS 33.234 and TS 23.234. In step S1609, the UE 113 and the PDG 134 setups the secure IP tunnel 141 according to TS 33.234 and TS 23.234.

In step S1610, the UE 113 transmits SIP message including the generated PANI 500 to the AS 121. An example of the header portions of SIP message necessary for explanation of this embodiment is shown as follows. Other portions which should be included in the header correspond to the standards of the corresponding RFC and 3GPP and their explanation will be omitted in this embodiment.

SUBSCRIBE sip:service@findservice.com SIP/2.0
P-Access-Network-Info: xxx
P-Asserted-Identity: sip:bob@operator.com (P-Asserted-Identity indicates a sender of the sip message and is attached by the CSCF 122.)

In step S1611, the AS 121 extracts the P-Access-Network-Info 500 and the IMPU (SIP URI) of the UE 113 from the received SIP message. The AS 121 updates the list 800 by the extracted value from the SIP message.

When the AS 121 updates the list 800, the AS 121 searches the list 800 for such an entry having the same P-Access-Network-Info 802 as the one currently updated. At this time, the AS 121 finds a pair of entries each having the same P-Access-Network-Info. The AS 121 transmits NOTIFY messages to each entry of the found pair including other's IMPU in the following steps.

In step S1612, the AS 121 transmits NOTIFY message including the IMPU of the UE 113 to the HIGA 101. The IMPU (sip:bob@operator.com) to be informed to the HIGA 101 may be attached to the header of the message or to a message body. In step S1613, the AS 121 transmits NOTIFY message including the IMPU of the HIGA 101 to the UE 113. The IMPU
(sip:room123.femto@operator.com) to be informed to the UE 113 may be attached to the header of the message or to a message body. An example of the header portions of NOTIFY message necessary for explanation of this embodiment are shown as follows. Other portions which should be included in the header correspond to the standards of the corresponding RFC and 3GPP and their explanation will be omitted in this embodiment.
(For the HIGA 101)
   NOTIFY sip:room123.femto@operator.com SIP/2.0
   Same-PANI-IMPU: sip:bob@operator.com
(For the UE 113)
   NOTIFY sip:bob@operator.com SIP/2.0
   Same-PANI-IMPU: sip:room123.femto@operator.com

According to this embodiment, the HIGA 101 and the UE can obtain SIP URI from the received NOTIFY messages to communicate with each other. The UE 113 may access to the TV 111 through the IMS network 120 using the secure IP tunnel 141.1

In the situation according to Fig. 2, it is also possible to transmit PUBLISH message to the AS 121 from HIGA 101 or UE 113 as is depicted in step S714 and S718 of Fig. 7 and to receive NOTIFY message from AS 121 at HIGA 101 or UE 113 as is depicted in step S716 and S720 of Fig. 7.

Further, the sequence diagram illustrated in Fig. 16 can be modified according to Fig. 9 or 12 without changing the P-Access-Network-Info generation process in step S1601, S1602 S1606, and S1607, the authentication process in step S1608 and the secure IP tunnel establishing process in step S1609.

Thus, it is possible for an operator of the WLAN-AP 103 such as the hotel staff, to delegate authentication of the UE 113 to the IMS operator which owns the IMS network 120. When UE 113 requests remote access to the HIGA 101 in the room 123 by using IMS messages, the CSCF 121 attaches the UE's public user identity (IMPU) as P-Asserted-Identity header which has already been authenticated in the IMS network 120.

It is also possible for the room owner such as the hotel to delegate charging of service usage to the IMS operator which owns the IMS network 120. The IMS network 120 can monitor any control and data flow between the UE 113 and the HIGA 101 in case of remote access and thus can charge the TV service to her telephone bill.

Furthermore, it is possible to distinguish the internet access made by the UE 113 from the access made by other users on WLAN1 or WLAN2, because PDG 134 assigns a public IP address different from the one used by WLAN-AP 103. In case the UE 113 uses the same public IP address as the users of WLAN1 (104), if the user has committed a crime such as posting an illegal picture on a web site, it is impossible to detect it in the access log if the user did it or someone using the WLAN1 did it.

An issue with this deployment is that the UE 113 cannot find HIGA 101 and TV 111 belonging to WLAN1 (104) directly. The present invention according to the embodiment solves the issue by applying the same usage of P-Access-Network-Info as Femto-BS 102 situation.

## Claims

1. A Femto base station (102) adapted to generate a cell and communicate with a multimedia gateway (101) having an IMS gateway functionality and a device detection functionality, said Femto base station (102) comprising:
receiving means (313) for receiving cell information related to the cell generated by said Femto base station (102) from a radio network controller (131);
first transmitting means (311) for transmitting the cell information to said multimedia gateway (101); and
second transmitting means (313) for transmitting the cell information to a user equipment (113) connected to the cell,
wherein the cell information comprises information that is used by said multimedia gateway (101) and said user equipment (113) to generate an identification information uniquely associating said multimedia gateway (101) with said user equipment (113).

2. The Femto base station (102) according to claim 1, wherein the cell information comprises Mobile Country Code, Mobile Network code, UMTS Cell Identity, and Local Area Code.

3. A multimedia gateway (101) which has an IMS gateway functionality and a device detection functionality and is adapted to communicate with a Femto base station (102) adapted to generate a cell, said multimedia gateway (101) comprising:
first receiving means (305) for receiving cell information related to the cell from said Femto base station (102);
generation means (306) for generating an identification information uniquely associating said multimedia gateway (101) with a user equipment (113) connected to the Femto base station (102) via the cell, using the received cell information; and
transmitting means for transmitting a SIP message with the identification information to an IMS application server (121) via an IMS network (120).

4. The multimedia gateway (101) according to claim 3, wherein the identification information is P-Access-Network-Info to be attached in a header portion of the SIP message.

5. The multimedia gateway (101) according to any one of claims 3 or 4, wherein the SIP message transmitted by said transmitting means is a SUBSCRIBE message or a PUBLISH message with control information to control at least one client device (111, 112) connected to said multimedia gateway (101).

6. The multimedia gateway (101) according to any one of claims 3-5, further comprising second receiving means (307) for receiving a SIP message notifying presence information regarding the user equipment (113) or a contact address of the user equipment (113).

7. A user equipment (113) adapted to be connected to a Femto base station (102) adapted to generate a cell and communicate with a multimedia gateway (101) having an IMS gateway functionality and a device detection functionality, said user equipment (113) comprising:
receiving means (321) for receiving cell information related to the cell from said Femto base station (102);
generation means (322) for generating an identification information uniquely associating said multimedia gateway (101) with said user equipment (113), using the received cell information; and
transmitting means (322) for transmitting a SIP message with the identification information to an IMS application server (121) via an IMS network (120).

8. A method of controlling a Femto base station (102) adapted to generate a cell and communicate with a multimedia gateway (101) having an IMS gateway functionality and a device detection functionality, said method comprising the steps of:
receiving (S701) cell information related to the cell generated by said Femto base station (102) from a radio network controller (131);
transmitting (S702) the cell information to said multimedia gateway (101); and
transmitting (S707) the cell information to a user equipment (113) connected to the cell,
wherein the cell information comprises information that is used by said multimedia gateway (101) and said user equipment (113) to generate an identification information uniquely associating said multimedia gateway (101) with said user equipment (113).

9. A method of controlling a multimedia gateway (101) which has an IMS gateway functionality and a device detection functionality and is adapted to communicate with a Femto base station (102) adapted to generate a cell, said method comprising the steps of:
receiving (S702) cell information related to the cell from said Femto base station (102);
generating (S702) an identification information uniquely associating said multimedia gateway (101) with a user equipment (113) connected to the Femto base station (102) via the cell, using the received cell information; and
transmitting (S704) a SIP message with the identification information to an IMS application server (121) via an IMS network (120).

10. The method according to claim 9, further comprising the step of receiving (S706) a SIP message notifying presence information regarding a user equipment (113) containing the user's contact address.

11. A method of controlling a user equipment (113) adapted to be connected to a Femto base station (102) adapted to generate a cell and communicate with a multimedia gateway (101) having an IMS gateway functionality and a device detection functionality, said method comprising the steps of:
receiving (S707) cell information related to the cell from said Femto base station (102);
generating an identification information uniquely associating said multimedia gateway (101) with said user equipment (113), using the received cell information; and
transmitting (S710) a SIP message with the identification information to an IMS application server (121) via an IMS network (120).

## Patentansprüche

1. Femto-Basisstation (102), die angepasst ist, um eine Zelle zu generieren und mit einem Multimedia-Gateway (101) zu kommunizieren, das eine IMS-Gateway-Funktionalität und eine Vorrichtungsdetektionsfunktionalität aufweist, wobei die Femto-Basisstation (102) Folgendes umfasst:
ein Empfangsmittel (313) zum Empfangen von Zelleninformationen in Bezug auf die Zelle, die von der Femto-Basisstation (102) generiert wird, von einer Funknetzsteuerung (131);
ein erstes Übertragungsmittel (311) zum Übertragen der Zelleninformationen zu dem Multimedia-Gateway (101); und
ein zweites Übertragungsmittel (313) zum Übertragen der Zelleninformationen zu einem Benutzergerät (113), das mit der Zelle verbunden ist,
wobei die Zelleninformationen Informationen umfassen, die von dem Multimedia-Gateway (101) und dem Benutzergerät (113) verwendet werden, um eine Identifikationsinformation zu generieren, die das Multimedia-Gateway (101) auf einzigartige Weise mit dem Benutzergerät (113) assoziiert.

2. Femto-Basisstation (102) nach Anspruch 1, wobei die Zelleninformationen Mobile Country Code, Mobile Network Code, UMTS Cell Identity und Local Area Code umfassen.

3. Multimedia-Gateway (101), das eine IMS-Gateway-Funktionalität und eine Vorrichtungsdetektionsfunktionalität aufweist und angepasst ist, um mit einer Femto-Basisstation (102) zu kommunizieren, die angepasst ist, um eine Zelle zu generieren, wobei das Multimedia-Gateway (101) Folgendes umfasst:
ein erstes Empfangsmittel (305) zum Empfangen von Zelleninformationen in Bezug auf die Zelle von der Femto-Basisstation (102);
ein Generierungsmittel (306) zum Generieren einer Identifikationsinformation, die das Multimedia-Gateway (101) auf einzigartige Weise mit einem Benutzergerät (113) assoziiert, das mit der Femto-Basisstation (102) über die Zelle verbunden ist, unter Verwendung der empfangenen Zelleninformationen; und
ein Übertragungsmittel zum Übertragen einer SIP-Nachricht mit der Identifikationsinformation zu einem IMS-Anwendungsserver (121) über ein IMS-Netzwerk (120).

4. Multimedia-Gateway (101) nach Anspruch 3, wobei die Identifikationsinformation P-Access-Network-Info entspricht, was in einem Headerbereich der SIP-Nachricht angehängt werden soll.

5. Multimedia-Gateway (101) nach einem der Ansprüche 3 oder 4, wobei die SIP-Nachricht, die von dem Übertragungsmittel übertragen wird, eine SUBSCRIBE-Nachricht oder eine PUBLISH-Nachricht mit Steuerinformationen ist, um mindestens eine Client-Vorrichtung (111, 112) zu steuern, die mit dem Multimedia-Gateway (101) verbunden ist.

6. Multimedia-Gateway (101) nach einem der Ansprüche 3-5, ferner umfassend ein zweites Empfangsmittel (307) zum Empfangen einer SIP-Nachricht, die Anwesenheitsinformationen im Hinblick auf das Benutzergerät (113) oder eine Kontaktadresse des Benutzergeräts (113) meldet.

7. Benutzergerät (113), das angepasst ist, um mit einer Femto-Basisstation (102) verbunden zu werden, die angepasst ist, um eine Zelle zu generieren und mit einem Multimedia-Gateway (101) zu kommunizieren, das eine IMS-Gateway-Funktionalität und eine Vorrichtungsdetektionsfunktionalität aufweist, wobei das Benutzergerät (113) Folgendes umfasst:
ein Empfangsmittel (321) zum Empfangen von Zelleninformationen in Bezug auf die Zelle von der Femto-Basisstation (102);
ein Generierungsmittel (322) zum Generieren einer Identifikationsinformation, die das Multimedia-Gateway (101) auf einzigartige Weise mit dem Benutzergerät (113) assoziiert, unter Verwendung der empfangenen Zelleninformationen; und
ein Übertragungsmittel (322) zum Übertragen einer SIP-Nachricht mit der Identifikationsinformation zu einem IMS-Anwendungsserver (121) über ein IMS-Netzwerk (120).

8. Verfahren zum Steuern einer Femto-Basisstation (102), die angepasst ist, um eine Zelle zu generieren und mit einem Multimedia-Gateway (101) zu kommunizieren, das eine IMS-Gateway-Funktionalität und eine Vorrichtungsdetektionsfunktionalität aufweist, wobei das Verfahren die folgenden Schritte umfasst:
Empfangen (S701) von Zelleninformationen in Bezug auf die Zelle, die von der Femto-Basisstation (102) generiert wird, von einer Funknetzsteuerung (131);
Übertragen (S702) der Zelleninformationen zu dem Multimedia-Gateway (101); und
Übertragen (S707) der Zelleninformationen zu einem Benutzergerät (113), das mit der Zelle verbunden ist,
wobei die Zelleninformationen Informationen umfassen, die von dem Multimedia-Gateway (101) und dem Benutzergerät (113) verwendet werden, um eine Identifikationsinformation zu generieren, die das Multimedia-Gateway (101) auf einzigartige Weise mit dem Benutzergerät (113) assoziiert.

9. Verfahren zum Steuern eines Multimedia-Gateways (101), das eine IMS-Gateway-Funktionalität und eine Vorrichtungsdetektionsfunktionalität aufweist und angepasst ist, um mit einer Femto-Basisstation (102) zu kommunizieren, die angepasst ist, um eine Zelle zu generieren, wobei das Verfahren die folgenden Schritte umfasst:
Empfangen (S702) von Zelleninformationen in Bezug auf die Zelle von der Femto-Basisstation (102);
Generieren (S702) einer Identifikationsinformation, die das Multimedia-Gateway (101) auf einzigartige Weise mit einem Benutzergerät (113) assoziiert, das mit der Femto-Basisstation (102) über die Zelle verbunden ist, unter Verwendung der empfangenen Zelleninformationen; und
Übertragen (S704) einer SIP-Nachricht mit der Identifikationsinformation zu einem IMS-Anwendungsserver (121) über ein IMS-Netzwerk (120).

10. Verfahren nach Anspruch 9, ferner umfassend den Schritt des Empfangens (S706) einer SIP-Nachricht, die Anwesenheitsinformationen im Hinblick auf ein Benutzergerät (113) meldet, welche die Kontaktadresse des Benutzers enthalten.

11. Verfahren zum Steuern eines Benutzergeräts (113), das angepasst ist, um mit einer Femto-Basisstation (102) verbunden zu werden, die angepasst ist, um eine Zelle zu generieren und mit einem Multimedia-Gateway (101) zu kommunizieren, das eine IMS-Gateway-Funktionalität und eine Vorrichtungsdetektionsfunktionalität aufweist, wobei das Verfahren die folgenden Schritte umfasst:
Empfangen (S707) von Zelleninformationen in Bezug auf die Zelle von der Femto-Basisstation (102);
Generieren einer Identifikationsinformation, die das Multimedia-Gateway (101) auf einzigartige Weise mit dem Benutzergerät (113) assoziiert, unter Verwendung der empfangenen Zelleninformationen; und
Übertragen (S710) einer SIP-Nachricht mit der Identifikationsinformation zu einem IMS-Anwendungsserver (121) über ein IMS-Netzwerk (120).

## Revendications

1. Station de base femto (102) conçue pour générer une cellule et communiquer avec une passerelle multimédia (101) ayant une fonctionnalité de passerelle IMS et une fonctionnalité de détection de dispositif, ladite station de base femto (102), comprenant :
un moyen de réception (313) pour recevoir des informations de cellule apparentées à la cellule générée par ladite station de base femto (102) provenant d'une commande de réseau radio (131) ;
un premier moyen de transmission (311) pour transmettre les informations de cellule à ladite passerelle multimédia (101) ; et
un second moyen de transmission (313) pour transmettre des informations de cellule à un équipement utilisateur (113) relié à la cellule,
dans laquelle les informations de cellule comprennent des informations qui sont utilisées par ladite passerelle multimédia (101) et ledit équipement utilisateur (113) pour générer des informations d'identification associant uniquement ladite passerelle multimédia (101) audit équipement utilisateur (113).

2. Station de base femto (102) selon la revendication 1, dans laquelle les informations de cellule comprennent l'indicatif de pays de la station mobile, le code de réseau mobile, l'identité de cellule UMTS et le code de la zone locale.

3. Passerelle multimédia (101) qui possède une fonctionnalité de passerelle IMS et une fonctionnalité de détection de dispositif et qui est conçue pour communiquer avec une station de base femto (102) conçue pour générer une cellule, ladite passerelle multimédia (101) comprenant :
un premier moyen de réception (305) pour recevoir des informations de cellule apparentées à la cellule provenant de ladite station de base femto (102) ;
un moyen de génération (306) pour générer des informations d'identification associant uniquement ladite passerelle multimédia (101) à un équipement utilisateur (113) relié à la station de base femto (102) à travers la cellule, à l'aide des informations de cellule reçues ; et
un moyen de transmission pour transmettre un message SIP avec les informations d'identification vers un serveur d'application IMS (121) via un réseau IMS (120).

4. Passerelle multimédia (101) selon la revendication 3, dans laquelle les informations d'identification sont les info-réseau-accès-p qui doivent être attachées à une partie d'entête du message SIP.

5. Passerelle multimédia (101) selon l'une quelconque des revendications 3 ou 4, dans lequel le message SIP transmis par ledit moyen de transmission est un message d'abonnement ou un message de publication contenant des informations de commande pour commander au moins un dispositif client (111, 112) relié à ladite passerelle multimédia (101).

6. Passerelle multimédia (101) selon l'une quelconque des revendications 3 à 5, comprenant également un second moyen de réception (307) pour recevoir un message SIP notifiant des informations de présence concernant l'équipement utilisateur (113) ou une adresse de contact de l'équipement utilisateur (113) .

7. Équipement utilisateur (113) conçu pour être relié à une station de base femto (102) conçu pour générer une cellule et communiquer avec une passerelle multimédia (101) ayant une fonctionnalité de passerelle IMS et une fonctionnalité de détection de dispositif, ledit équipement utilisateur (113), comprenant :
un moyen de réception (321) pour recevoir des informations de cellule apparentées à la cellule provenant de ladite station de base femto (102) ;
un moyen de génération (322) pour générer des informations d'identification associant uniquement ladite passerelle multimédia (101) avec ledit équipement utilisateur (113), à l'aide des informations de cellule reçues ; et
un moyen de transmission (322) pour transmettre un message SIP avec les informations d'identification vers un serveur d'application IMS (121) via un réseau IMS (120).

8. Procédé de commande d'une station de base femto (102) conçue pour générer une cellule et communiquer avec une passerelle multimédia (101) ayant une fonctionnalité de passerelle IMS et une fonctionnalité de détection de dispositif, ledit procédé comprenant les étapes suivantes :
la réception (S701) des informations de cellule apparentées à la cellule générée par ladite station de base femto (102) provenant d'une commande de réseau radio (131) ;
la transmission (S702) des informations de cellule à ladite passerelle multimédia (101) ; et
la transmission (S707) des informations de cellule à un équipement utilisateur (113) relié à la cellule,
dans lequel les informations de cellule comprennent des informations qui sont utilisées par ladite passerelle multimédia (101) et ledit équipement utilisateur (113) pour générer des informations d'identification associant uniquement ladite passerelle multimédia (101) audit équipement utilisateur (113).

9. Procédé de commande d'une passerelle multimédia (101) qui possède une fonctionnalité de passerelle IMS et une fonctionnalité de détection de dispositif et qui est conçue pour communiquer avec une station de base femto (102) conçue pour générer une cellule, ledit procédé comprenant les étapes suivantes :
la réception (S702) des informations de cellule apparentées à la cellule provenant de ladite station de base femto (102) ;
la génération (S702) des informations d'identification associant uniquement ladite passerelle multimédia (101) à un équipement utilisateur (113) relié à une station de base femto (102) à travers la cellule, à l'aide des informations de cellule reçues ; et
la transmission (S704) d'un message SIP avec les informations d'identification vers un serveur d'application IMS (121) via un réseau IMS (120).

10. Procédé selon la revendication 9, comprenant également l'étape de réception (S706) d'un message SIP notifiant des informations de présence concernant un équipement utilisateur (113) contenant l'adresse de contact de l'utilisateur.

11. Procédé de commande d'un équipement utilisateur (113) conçu pour être relié à une station de base femto (102) conçu pour générer une cellule et communiquer avec une passerelle multimédia (101) ayant une fonctionnalité de passerelle IMS et une fonctionnalité de détection de dispositif, ledit procédé comprenant les étapes suivantes :
la réception (S707) des informations de cellule apparentées à la cellule provenant de ladite station de base femto (102) ;
la génération des informations d'identification associant uniquement ladite passerelle multimédia (101) avec ledit équipement utilisateur (113), à l'aide des informations de cellule reçues ; et
la transmission (S710) d'un message SIP avec les informations d'identification vers un serveur d'application IMS (121) via un réseau IMS (120).
